# EUROPEAN PATENT APPLICATION

(11) **EP 4 507 217 A1**
(43) Date of publication of application: **12.02.2025**
(21) Application number: 23779924.2
(22) Date of filing: 22.03.2023
(51) Int. Cl.: H04B 10/80, G01S 3/808, G01S 5/30, G01S 15/74, H04B 10/564

(54) **COMMUNICATION DEVICE AND COMMUNICATION METHOD**

(30) Priority: 31.03.2022 JP 2022060911
(71) Applicant: Kyocera Corporation, Kyoto-shi, Kyoto 612-8501 (JP)
(72) Inventor: IIDA, Muneo, Kyoto-shi, Kyoto 612-8501 (JP); FUKUTA, Noriyoshi, Kyoto-shi, Kyoto 612-8501 (JP); YAMAZAKI, Chiharu, Kyoto-shi, Kyoto 612-8501 (JP)
(74) Representative: Viering, Jentschura & Partner mbB Patent- und Rechtsanwälte
(86) International application number: PCT/JP2023/011144
(87) International publication number: WO 2023/189912

(57) **Abstract**

A communication apparatus for performing underwater visible light communication with a target communication apparatus includes a visible light communicator that transmits and receives a visible light signal including communication data, a sound wave communicator that receives a sound wave signal including information used to control establishment of visible light communication connection, the sound wave signal having been transmitted from the target communication apparatus or another communication apparatus, and a controller that performs control to establish the visible light communication connection with the target communication apparatus, based on the information included in the received sound wave signal.

## Description

### TECHNICAL FIELD

The present disclosure relates to a communication apparatus and a communication method for performing underwater visible light communication.

### BACKGROUND

A known transmission medium in underwater communication includes a method using visible light. Visible light has high directivity, and thus in known visible light communication, under the assumption that a transmission side and a reception side of a visible light signal are fixed, communication is generally performed with the transmission side and the reception side facing each other.

When the transmission side and/or the reception side is movable in visible light communication, communication apparatuses on the transmission side and the reception side need to direct a visible light communication direction (for example, an optical axis direction), which is a direction in which the visible light signal is transmitted, at a communication partner. Here, on land or in space, a direction of the communication partner can be recognized using radio waves, whereas under water, attenuation of radio waves is significant, and thus using radio waves to recognize the direction of the communication partner in underwater visible light communication is difficult.

Patent Document 1 describes a laser underwater communication apparatus including a sonar apparatus. In the communication apparatus, angle of depression, angle of elevation, and azimuth information related to a communication target is received from the sonar apparatus, and a servomotor is controlled to direct a laser optical system in the direction.

### CITATION LIST

### PATENT LITERATURE

Patent Document 1: JP 4-103232 A

### SUMMARY

In a first aspect, a communication apparatus is an apparatus for performing underwater visible light communication with a target communication apparatus. The communication apparatus includes a visible light communicator that transmits and receives a visible light signal including communication data, a sound wave communicator that receives a sound wave signal including information used to control establishment of visible light communication connection, the sound wave signal having been transmitted from the target communication apparatus or another communication apparatus, and a controller that performs control to establish the visible light communication connection with the target communication apparatus, based on the information included in the received sound wave signal.

In a second aspect, a communication method is a method used in a communication apparatus that performs underwater visible light communication with a target communication apparatus. The communication method includes a step of receiving a sound wave signal including information used to control establishment of visible light communication connection, the sound wave signal having been transmitted from the target communication apparatus or another communication apparatus, a step of performing control to establish the visible light communication connection with the target communication apparatus, based on the information included in the received sound wave signal, and a step of transmitting and receiving a visible light signal including communication data.

### BRIEF DESCRIPTION OF THE DRAWINGS

FIG. 1 is a diagram illustrating a configuration of a communication apparatus according to an embodiment.
FIG. 2 is a diagram illustrating an application example of the communication apparatus according to an embodiment.
FIG. 3 is a diagram illustrating an operation scenario example of the communication apparatus according to a first embodiment.
FIG. 4 is a diagram illustrating contents (formats) of sound wave signals transmitted and received in the operation scenario example according to the first embodiment.
FIG. 5 is a diagram illustrating an operation flow example of the communication apparatus according to the first embodiment.
FIG. 6 is a diagram illustrating an operation scenario example of the communication apparatus according to a first variation of the first embodiment.
FIG. 7 is a diagram illustrating an operation flow example of the communication apparatus according to the first variation of the first embodiment.
FIG. 8 is a diagram illustrating an operation scenario example of the communication apparatus according to a second variation of the first embodiment.
FIG. 9 is a diagram illustrating contents (formats) of sound wave signals transmitted and received in the operation scenario example according to the second variation of the first embodiment.
FIG. 10 is a diagram illustrating an operation flow example of the communication apparatus according to the second variation of the first embodiment.
FIG. 11 is a diagram illustrating an operation scenario example of the communication apparatus according to the second variation of the first embodiment.
FIG. 12 is a diagram illustrating an operation flow example of the communication apparatus according to a third variation of the first embodiment.
FIG. 13 is a diagram illustrating an operation scenario example of the communication apparatus according to a second embodiment.
FIG. 14 is a diagram illustrating contents (formats) of sound wave signals transmitted and received in the operation scenario example according to the second embodiment.
FIG. 15 is a diagram illustrating an operation flow example of the communication apparatus according to the second embodiment.
FIG. 16 is a diagram illustrating an example of contents (format) of a broadcast sound wave signal according to a third embodiment.
FIG. 17 is a diagram illustrating an operation scenario example of the communication apparatus according to the third embodiment.
FIG. 18 is a diagram illustrating an operation scenario example of the communication apparatus according to a first variation of the third embodiment.
FIG. 19 is a diagram illustrating an operation scenario example of the communication apparatus according to a second variation of the third embodiment.

### DESCRIPTION OF EMBODIMENTS

Sound waves have a longer underwater communicable distance (that is, a smaller underwater attenuation amount) than visible light and have lower directivity than visible light, and are thus suitable as transmission media for recognizing a direction of a communication partner. Here, by using a sonar apparatus as with the communication apparatus described in Patent Document 1, an object can be detected through radiation of sound waves and capturing of reflected waves thereof.

However, because whether the object detected using the sonar apparatus is a visible light communication apparatus cannot be known in the first place, unnecessary control of a visible light communication direction may be caused. Even if the object detected using the sonar apparatus is a visible light communication apparatus, visible light communication connection cannot be established unless the visible light communication direction in the communication partner is directed at the subject apparatus. Thus, known technology has room for improvement in smoothing establishment of visible light communication connection.

In view of this, the present disclosure is intended to smooth establishment of visible light communication connection.

A communication apparatus according to embodiments will be described with reference to the drawings. In the description of the drawings, the same or similar parts are denoted by the same or similar reference signs.

### (1) First Embodiment

First, a communication apparatus according to a first embodiment will be described. The communication apparatus according to the first embodiment is an apparatus that performs underwater visible light communication with a target communication apparatus (that is, a communication partner). Such a communication apparatus may be referred to as an underwater communication apparatus or an underwater visible light communication apparatus. Note that, in the following, undersea communication is mainly assumed as underwater communication; however, the underwater communication may be communication in a lake or a river.

### (1.1) Configuration of Communication Apparatus

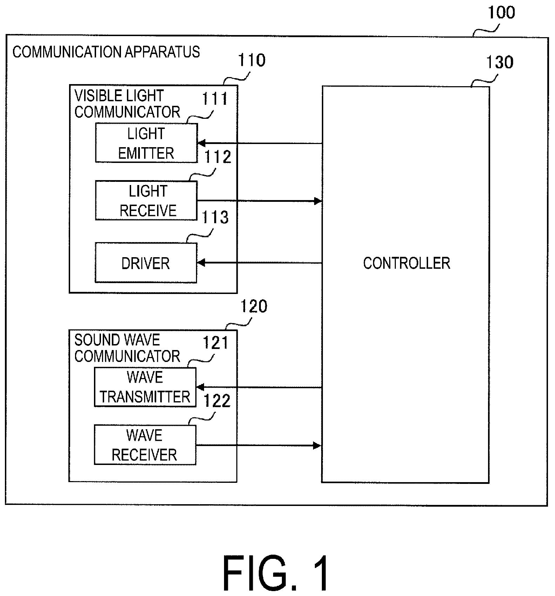

FIG. 1 is a diagram illustrating a configuration of a communication apparatus 100 according to the first embodiment. The communication apparatus 100 includes a visible light communicator 110, a sound wave communicator 120, and a controller 130.

The visible light communicator 110 transmits and receives a visible light signal including communication data under control of the controller 130. In other words, the visible light communicator 110 performs data communication with the target communication apparatus through visible light communication. The visible light communicator 110 includes a light emitter 111, a light receiver 112, and a driver 113.

The light emitter 111 includes at least one light emitting element. The light emitting element may be a laser diode (LD) or a light emitting diode (LED). The light emitter 111 converts an electric signal (transmission signal) output by the controller 130 for visible light communication into a visible light signal, and transmits the visible light signal to the target communication apparatus. The light emitter 111 may include a plurality of light emitting elements arranged toward various directions to be able to transmit the visible light signal in various directions (for example, all 360-degree directions).

The following mainly assumes that the light emitting elements are LDs and underwater laser communication is performed as underwater visible light communication. Note that the communicable distance when the LEDs are used is approximately several tens of meters, and the communicable distance when the LDs are used is approximately 200 meters. Note that visible light has high directivity and thus requires high-accuracy optical-axis alignment technology. Visible light communication enables higher-speed communication than sound wave communication, and enables further miniaturization and lower power consumption than sound wave communication.

The light receiver 112 includes at least one light receiving element. The light receiver 112 receives a visible light signal from the target communication apparatus, converts the received visible light signal into an electric signal (reception signal), and outputs the reception signal to the controller 130. The light receiver 112 may include a plurality of light receiving elements arranged toward various directions to be able to receive the visible light signal from various directions (for example, all 360-degree directions).

The driver 113 drives the light emitter 111 to make a visible light communication direction (for example, an optical axis direction), which is a direction in which the visible light communicator 110 (specifically, the light emitter 111) transmits the visible light signal, variable under control of the controller 130. The driver 113 may include an actuator for changing an orientation of the light emitter 111. The driver 113 may include an actuator for changing an orientation of the light receiver 112. The actuator may change an orientation of a set of the light emitter 111 and the light receiver 112. The driver 113 may include a drive circuit for selectively driving a part of light emitting elements corresponding to a specific direction out of the plurality of light emitting elements arranged toward various directions.

The sound wave communicator 120 transmits and receives a sound wave signal including information used to control establishment of visible light communication connection under control of the controller 130. In other words, the sound wave communicator 120 performs communication for controlling establishment of visible light communication connection through sound wave communication. The sound wave communicator 120 includes a wave transmitter 121 and a wave receiver 122.

The wave transmitter 121 includes at least one wave transmitting device. The wave transmitter 121 converts an electric signal (transmission signal) output by the controller 130 for sound wave communication into a sound wave signal, and transmits the sound wave signal. The wave receiver 122 includes at least one wave receiving device. The wave receiver 122 receives a sound wave signal, converts the received sound wave signal into an electric signal (reception signal), and outputs the reception signal to the controller 130.

Sound waves (sound wave signal) have a longer underwater communicable distance transmission distance, that is, a smaller underwater attenuation amount, than visible light, but a communication speed thereof is significantly lower than that in visible light communication. Sound waves (sound wave signal) have lower directivity than visible light (visible light signal), and do not require high-accuracy optical-axis alignment as in visible light communication. In other words, in sound wave communication, communication can be performed in a wider communication range than in visible light communication. Note that sound wave communication has larger power consumption than visible light communication.

The controller 130 controls overall operation of the communication apparatus 100. For example, the controller 130 controls the visible light communicator 110 and the sound wave communicator 120. The controller 130 includes at least one processor and at least one memory. The memory stores a program to be executed by the processor and information to be used for processing by the processor. The processor may include a digital signal processor and a Central Processing Unit (CPU). The digital signal processor performs modulation and demodulation, coding and decoding, and the like on digital signals. The CPU executes the program stored in the memory to thereby perform various types of processing.

In the communication apparatus 100 configured as described above, the sound wave communicator 120 (wave receiver 122) receives a sound wave signal having been transmitted from the target communication apparatus or another communication apparatus and including information used to control establishment of visible light communication connection. The controller 130 performs control to establish visible light communication connection to the target communication apparatus, based on the information included in the sound wave signal received by the sound wave communicator 120. Thus, advanced control is enabled as compared to when a sonar apparatus is used, and establishment of visible light communication connection can be smoothed.

The sound wave communicator 120 (wave receiver 122) may receive a sound wave signal including an identifier of the target communication apparatus. Thus, the controller 130 can identify the target communication apparatus, based on the identifier included in the received sound wave signal. The sound wave communicator 120 (wave transmitter 121) may transmit a sound wave signal including an identifier of the communication apparatus 100. Thus, another communication apparatus that has received the sound wave signal can identify the communication apparatus 100, based on the identifier included in the received sound wave signal.

In the first embodiment, the controller 130 acquires a position of the target communication apparatus through sound wave communication using the sound wave communicator 120. The controller 130 controls the visible light communicator 110 (for example, the driver 113) to direct the visible light communication direction at the target communication apparatus, based on the position of the target communication apparatus and a position (that is, a self-position) of the communication apparatus 100. Thus, the visible light communication direction (for example, the optical axis direction) can be appropriately directed at the target communication apparatus. Note that the "position" may be a three-dimensional position, and may be, for example, a position on reference point coordinates. Alternatively, the "position" may be an absolute position consisting of latitude, longitude, and altitude.

In the first embodiment, the sound wave communicator 120 (wave receiver 122) receives a sound wave signal including position information indicating the position of the target communication apparatus. The controller 130 acquires the position of the target communication apparatus, based on the position information included in the received sound wave signal. Thus, the controller 130 can appropriately acquire the position of the target communication apparatus. In the first embodiment, the sound wave communicator 120 (wave receiver 122) receives the sound wave signal including the position information indicating the position of the target communication apparatus from the target communication apparatus. Thus, the controller 130 can directly acquire the position of the target communication apparatus from the target communication apparatus.

As an acquisition method of the position (that is, the self-position) of the communication apparatus 100, when the communication apparatus 100 is fixed to the bottom of the sea, an undersea structure, a buoy, or the like, for example, the controller 130 may store the self-position in advance. Alternatively, on the assumption that the communication apparatus 100 is capable of receiving satellite signals from positioning satellites, the communication apparatus 100 may include a Global Navigation Satellite System (GNSS) receiver and the controller 130 may acquire the self-position using GNSS positioning. These acquisition methods of the self-position are suitable as self-position acquisition methods of the communication apparatus 100 that operates as a base station apparatus.

On the other hand, on the assumption that the communication apparatus 100 is movable and is incapable of receiving satellite signals from positioning satellites, the controller 130 may acquire the self-position using sound wave communication. Such an acquisition method of the self-position is suitable as a self-position acquisition method of the communication apparatus 100 that operates as a terminal apparatus. For example, the sound wave communicator 120 may transmit a first sound wave signal (hereinafter referred to as an "inquiry sound wave signal"), and then receive a second sound wave signal (hereinafter referred to as a "response sound wave signal") from each base station apparatus that has received the inquiry sound wave signal. The controller 130 acquires the position (self-position) of the terminal apparatus, based on a round-trip propagation time from each base station apparatus determined according to reception of the response sound wave signal. Specifically, the controller 130 can acquire a distance between the terminal apparatus and each base station apparatus, based on an underwater sound wave propagation speed (average speed of sound) and the round-trip propagation time. When the controller 130 acquires distances from three or more base station apparatuses, the controller 130 can acquire the self-position on reference coordinates with each base station apparatus being a reference point. Such a self-position acquisition method may be referred to as a Long Base Line (LBL) method or a Short Base Line (SBL) method. In the first embodiment, LBL is mainly assumed as the self-position acquisition method.

The sound wave communicator 120 (wave transmitter 121) transmits a sound wave signal including the position information indicating the position (self-position) of the communication apparatus 100 to the target communication apparatus. Thus, the target communication apparatus can directly acquire the position of the communication apparatus 100 from the communication apparatus 100.

The controller 130 acquires a distance between the target communication apparatus and the communication apparatus 100, based on the position of the target communication apparatus and the position of the communication apparatus 100. The controller 130 may control initial transmit power of the visible light signal in visible light communication, based on the acquired distance. Thus, the controller 130 can appropriately control and set the initial transmit power of the visible light signal in visible light communication.

When a plurality of candidate target communication apparatuses (hereinafter referred to as "candidate communication apparatuses") are present, the sound wave communicator 120 (wave receiver 122) may receive a sound wave signal including the position information from each candidate communication apparatus. In this case, the controller 130 may acquire a distance from each candidate communication apparatus, based on the position of each candidate communication apparatus and the position of the communication apparatus 100. The controller 130 may select the target communication apparatus out of these candidate communication apparatuses, based on the acquired distances. For example, the controller 130 may preferentially select the candidate communication apparatus having the shortest distance from the communication apparatus 100 as the target communication apparatus over other candidate communication apparatuses. Thus, the controller 130 can appropriately select the target communication apparatus out of the plurality of candidate communication apparatuses.

The sound wave communicator 120 may transmit a connection sound wave signal to establish visible light communication connection to the target communication apparatus and/or receive the connection sound wave signal from the target communication apparatus. After the visible light communication connection is established, the controller 130 controls the visible light communicator 110 to perform underwater visible light communication with the target communication apparatus. Thus, visible light communication connection can be explicitly established, and visible light communication can be appropriately started.

### (1.2) Application Example of Communication Apparatus

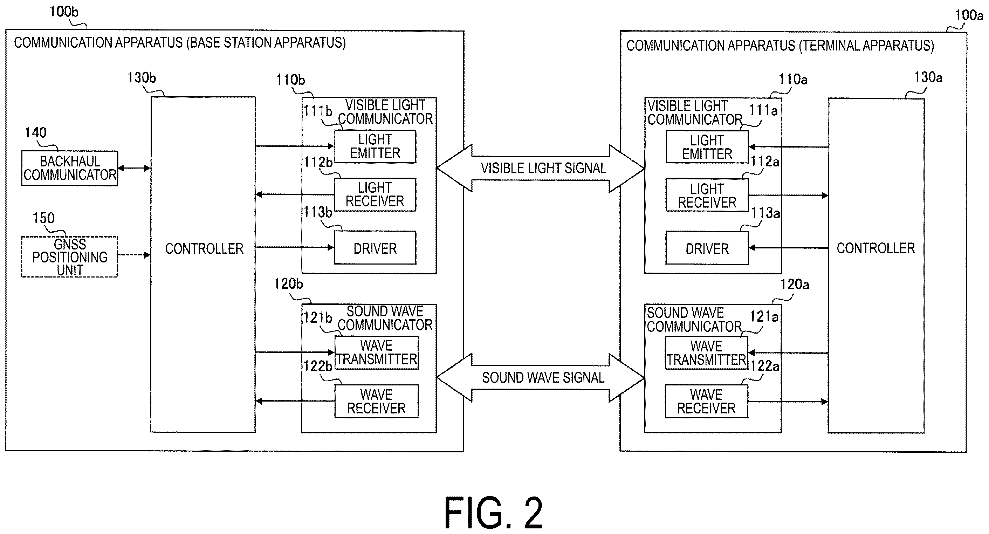

FIG. 2 is a diagram illustrating an application example of the communication apparatus 100 according to the first embodiment. Here, a case is assumed in which underwater communication is performed between the terminal apparatus and the base station apparatus. Note that a case may be assumed in which underwater communication is performed between terminal apparatuses. Alternatively, a case may be assumed in which underwater communication is performed between base station apparatuses. When underwater communication is performed between terminal apparatuses, each of a pair of communication apparatuses (the communication apparatus and the target communication apparatus) performing underwater visible light communication is a terminal apparatus. When underwater communication is performed between base station apparatuses, each of a pair of communication apparatuses (the communication apparatus and the target communication apparatus) performing underwater visible light communication is a base station apparatus.

In the example of FIG. 2, one communication apparatus 100 performing underwater visible light communication is a terminal apparatus 100a, and the other communication apparatus 100 performing underwater visible light communication is a base station apparatus 100b. From the viewpoint of the terminal apparatus 100a, the base station apparatus 100b is the target communication apparatus, and from the viewpoint of the base station apparatus 100b, the terminal apparatus 100a is the target communication apparatus.

The base station apparatus 100b includes a backhaul communicator 140. The backhaul communicator 140 performs communication with a network side (for example, on the ground or on board a ship) through wired communication, radio wave communication, or visible light communication under control of a controller 130b. The backhaul communicator 140 may be capable of inter-base station communication with other nearby base station apparatuses.

The base station apparatus 100b may include a GNSS positioning unit 150 that acquires the position (self-position) of the base station apparatus 100b through GNSS positioning. The GNSS positioning unit 150 may include a GNSS receiver for at least one selected from the group consisting of the Global Positioning System (GPS), the Global Navigation Satellite System (GLONASS), the Indian Regional Navigational Satellite System (IRNSS), COMPASS, and Galileo, for example. Note that, when the base station apparatus 100b is fixed, the controller 130b may store the position (self-position) of the base station apparatus 100b in advance. In this case, the base station apparatus 100b may not need to include the GNSS positioning unit 150.

A visible light communicator 110a of the terminal apparatus 100a and a visible light communicator 110b of the base station apparatus 100b perform visible light communication (specifically, underwater visible light communication), and transmit and receive a visible light signal. On the other hand, a sound wave communicator 120a of the terminal apparatus 100a and a sound wave communicator 120b of the base station apparatus 100b perform sound wave communication (specifically, underwater sound wave communication), and transmit and receive a sound wave signal.

In the base station apparatus 100b, the sound wave communicator 120b (wave receiver 122b) receives a sound wave signal having been transmitted from the terminal apparatus 100a (wave transmitter 121a) and including information used to control establishment of visible light communication connection. The controller 130b performs control to establish visible light communication connection to the terminal apparatus 100a, based on the information included in the sound wave signal received by the sound wave communicator 120b. For example, the controller 130b acquires the position of the terminal apparatus 100a through sound wave communication using the sound wave communicator 120b. The controller 130b controls the visible light communicator 110b (for example, a driver 113b) to direct the visible light communication direction at the terminal apparatus 100a, based on the position of the terminal apparatus 100a and the position (that is, the self-position) of the base station apparatus 100b.

In the base station apparatus 100b, the sound wave communicator 120b (wave transmitter 121b) may transmit a sound wave signal including a base station ID to the terminal apparatus 100a. The sound wave communicator 120b (wave receiver 122b) may receive a sound wave signal including a terminal ID from the terminal apparatus 100a.

In the base station apparatus 100b, the sound wave communicator 120b (wave transmitter 121b) may transmit a sound wave signal including base station position information indicating the position of the base station apparatus to the terminal apparatus 100a. The sound wave communicator 120b (wave receiver 122b) may receive a sound wave signal including terminal position information indicating the position of the terminal apparatus 100a from the terminal apparatus 100a.

In the base station apparatus 100b, the sound wave communicator 120b may transmit a connection sound wave signal to establish visible light communication connection to the terminal apparatus 100a and/or receive the connection sound wave signal from the terminal apparatus 100a. For example, the sound wave communicator 120b may receive a connection request sound wave signal from the terminal apparatus 100a, and transmit a confirmation response sound wave signal (hereinafter referred to as an "ACK sound wave signal") indicating acceptance of the connection request to the terminal apparatus 100a.

In the base station apparatus 100b, the controller 130b may acquire a distance between the terminal apparatus 100a and the base station apparatus 100b, based on the position of the terminal apparatus 100a and the position (self-position) of the base station apparatus 100b. The controller 130b may control the initial transmit power of the visible light signal in visible light communication, based on the acquired distance.

On the other hand, in the terminal apparatus 100a, the sound wave communicator 120a (wave receiver 122a) receives a sound wave signal having been transmitted from the base station apparatus 100b (wave transmitter 121b) and including information used to control establishment of visible light communication connection. The controller 130a performs control to establish visible light communication connection to the base station apparatus 100b, based on the information included in the sound wave signal received by the sound wave communicator 120a. For example, the controller 130a acquires the position of the base station apparatus 100b through sound wave communication using the sound wave communicator 120a. The controller 130a controls the visible light communicator 110a (for example, a driver 113a) to direct the visible light communication direction at the base station apparatus 100b, based on the position of the base station apparatus 100b and the position (that is, the self-position) of the terminal apparatus 100a.

In the terminal apparatus 100a, the sound wave communicator 120a (wave transmitter 121a) may transmit a sound wave signal including an identifier (hereinafter referred to as a "terminal ID") of the terminal apparatus 100a to the base station apparatus 100b. The sound wave communicator 120a (wave receiver 122a) may receive a sound wave signal including an identifier (hereinafter referred to as a "base station ID") of the base station apparatus 100b from the base station apparatus 100b.

In the terminal apparatus 100a, the sound wave communicator 120a (wave transmitter 121a) may transmit a sound wave signal including the terminal position information indicating the position of the terminal apparatus 100a to the base station apparatus 100b. The sound wave communicator 120a (wave receiver 122a) may receive a sound wave signal including the base station position information indicating the position of the base station apparatus 100b from the base station apparatus 100b.

In the terminal apparatus 100a, the sound wave communicator 120a may transmit a connection sound wave signal to establish visible light communication connection to the base station apparatus 100b and/or receive the connection sound wave signal from the base station apparatus 100b. For example, the sound wave communicator 120a may transmit a connection request sound wave signal to the base station apparatus 100b, and receive an ACK sound wave signal from the base station apparatus 100b.

In the terminal apparatus 100a, the controller 130a may acquire a distance between the terminal apparatus 100a and the base station apparatus 100b, based on the position (self-position) of the terminal apparatus 100a and the position of the base station apparatus 100b. The controller 130a may control the initial transmit power of the visible light signal in visible light communication, based on the acquired distance.

The terminal apparatus 100a may perform underwater visible light communication, with the base station apparatus 100b selected out of a plurality of base station apparatuses 100b (that is, a plurality of candidate communication apparatuses) being the target communication apparatus. The controller 130a may perform control of selecting the target communication apparatus out of the plurality of base station apparatuses 100b, based on the information included in the sound wave signal received by the sound wave communicator 120a. Thus, underwater visible light communication with an optimal target communication apparatus out of the plurality of base station apparatuses 100b can be performed.

In the terminal apparatus 100a, the controller 130a may acquire a distance between the terminal apparatus 100a and each base station apparatus 100b, based on the sound wave signal received by the sound wave communicator 120a. The controller 130a may select the target communication apparatus out of the plurality of base station apparatuses 100b, based on the distance acquired with respect to each base station apparatus 100b. For example, the controller 130a may preferentially select the base station apparatus 100b having the shortest distance from the terminal apparatus 100a as the target communication apparatus.

In the base station apparatus 100b, the sound wave communicator 120b may transmit a sound wave signal including accommodation availability information indicating accommodation availability of the terminal apparatus 100a in the base station apparatus 100b. For example, when the base station apparatus 100b can perform visible light communication with only a single terminal apparatus 100a at a certain time point and the base station apparatus 100b is in the middle of performing visible light communication with a terminal apparatus 100a, the sound wave communicator 120b transmits a sound wave signal including the accommodation availability information indicating that the base station apparatus 100b cannot newly accommodate a terminal apparatus 100a.

In the terminal apparatus 100a, the sound wave communicator 120a receives the sound wave signal including the accommodation availability information from the base station apparatus 100b. The controller 130a may select the target communication apparatus out of the plurality of base station apparatuses 100b, based on the accommodation availability information included in the received sound wave signal. Specifically, the controller 130a extracts the base station apparatuses 100b that can newly accommodate a terminal apparatus 100a out of the plurality of base station apparatuses 100b, and selects the target communication apparatus out of the extracted base station apparatuses 100b.

### (1.3) Operation Example of Communication Apparatus

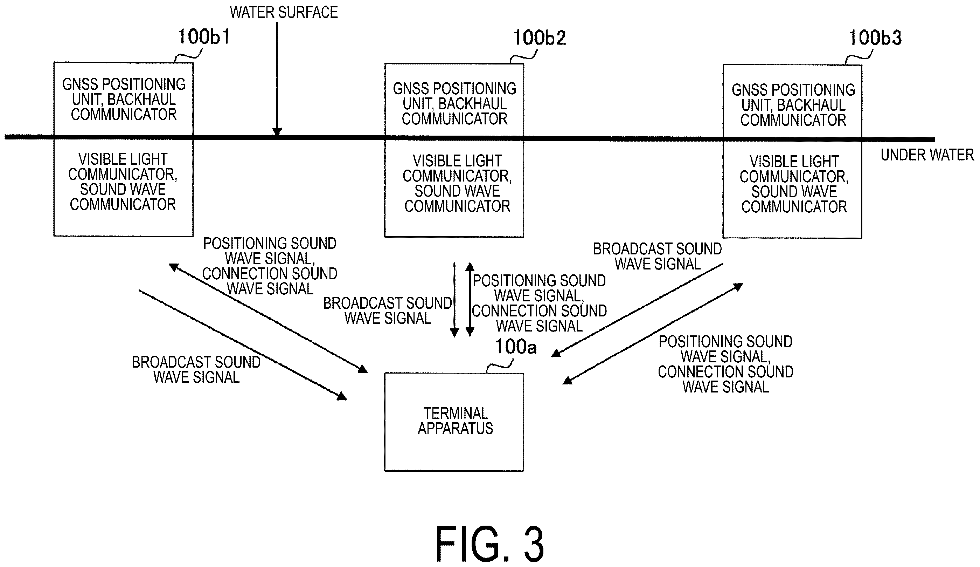

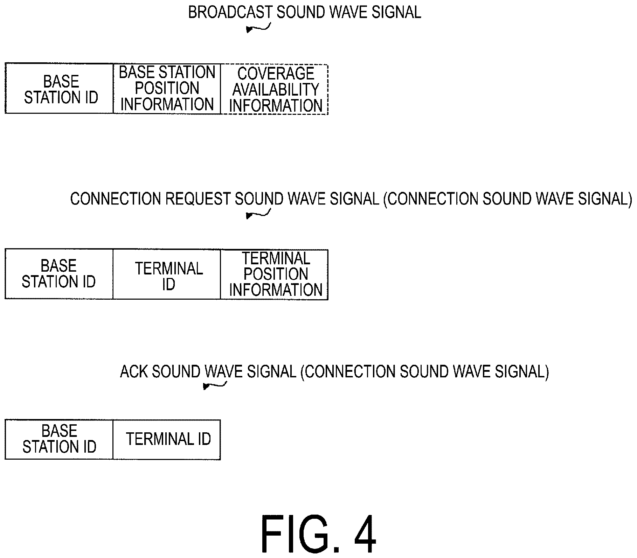

FIG. 3 is a diagram illustrating an operation scenario example of the communication apparatus 100 according to the first embodiment. FIG. 4 is a diagram illustrating contents (formats) of sound wave signals transmitted and received in the present operation scenario example.

In the operation scenario example according to the first embodiment, an LBL reference point is present inside each base station apparatus 100b. That is, each base station apparatus 100b has a function as an LBL transponder.

In the present operation scenario example, three base station apparatuses 100b (100b1, 100b2, and 100b3) are on the water surface, and for example, each base station apparatus 100b is fixed to a buoy. In each base station apparatus 100b, the visible light communicator 110b and the sound wave communicator 120b are under the water (below the water surface), and the GNSS positioning unit 150 and the backhaul communicator 140 are over the water (over the water surface). The terminal apparatus 100a is under the water.

Firstly, the terminal apparatus 100a transmits and receives an LBL positioning sound wave signal to and from each base station apparatus 100b. Specifically, the terminal apparatus 100a transmits an inquiry sound wave signal to each base station apparatus 100b and receives a response sound wave signal from each base station apparatus 100b, and thereby acquires a round-trip propagation time from each base station apparatus 100b. Then, the terminal apparatus 100a acquires the self-position, based on the acquired round-trip propagation time.

Secondly, the terminal apparatus 100a receives a broadcast sound wave signal from each base station apparatus 100b. The broadcast sound wave signal is a periodically transmitted sound wave signal, and is a sound wave signal including information related to the base station apparatus 100b. The broadcast sound wave signal is a broadcast message having an unspecified destination of the broadcast sound wave signal.

In the first embodiment, as illustrated in FIG. 4, the broadcast sound wave signal includes information related to the base station apparatus 100b being a transmission source of the broadcast sound wave signal. Specifically, the broadcast sound wave signal includes the base station ID of the base station apparatus 100b being a transmission source of the broadcast sound wave signal, the base station position information of the base station apparatus 100b, and the accommodation availability information of the base station apparatus 100b. Note that, instead of the accommodation availability information being included in the broadcast sound wave signal, only the base station apparatus 100b that can accommodate the terminal apparatus 100a may transmit the broadcast sound wave signal.

The terminal apparatus 100a receives the broadcast sound wave signal from each base station apparatus 100b, and thereby acquires the position of each base station apparatus 100b.

Thirdly, the terminal apparatus 100a selects the base station apparatus 100b to be the target communication apparatus, and transmits and receives a connection sound wave signal to and from the base station apparatus 100b (target communication apparatus). For example, the terminal apparatus 100a transmits a connection request sound wave signal to the base station apparatus 100b (target communication apparatus), and receives an ACK sound wave signal from the base station apparatus 100b (target communication apparatus).

In the first embodiment, as illustrated in FIG. 4, the connection request sound wave signal includes the base station ID of the base station apparatus 100b (that is, the destination of the connection request sound wave signal) selected by the terminal apparatus 100a, the terminal ID of the terminal apparatus 100a (that is, the transmission source of the connection request sound wave signal), and the terminal position information of the terminal apparatus 100a. As illustrated in FIG. 4, the ACK sound wave signal includes the base station ID of the base station apparatus 100b being a transmission source of the ACK sound wave signal, and the terminal ID of the terminal apparatus 100a being a destination of the ACK sound wave signal.

The base station apparatus 100b (target communication apparatus) receives the connection request sound wave signal, and thereby acquires the position of the terminal apparatus 100a.

Fourthly, the terminal apparatus 100a controls the visible light communicator 110a to direct the visible light communication direction at the base station apparatus 100b, based on the position of the base station apparatus 100b (target communication apparatus) and the position (self-position) of the terminal apparatus 100a. In the same and/or similar manner, the base station apparatus 100b controls the visible light communicator 110b to direct the visible light communication direction at the terminal apparatus 100a, based on the position (self-position) of the base station apparatus 100b and the position of the terminal apparatus 100a. As a result, visible light communication connection is established between the base station apparatus 100b and the terminal apparatus 100a. When visible light communication connection is established, the base station apparatus 100b and the terminal apparatus 100a transmit and receive communication data through visible light communication.

Note that, when the base station apparatus 100b that has received the connection request sound wave signal rejects the connection request, the base station apparatus 100b may transmit a negative response sound wave signal (NACK) sound wave signal, instead of transmitting the ACK sound wave signal. Alternatively, when the base station apparatus 100b rejects the connection request, it may be arranged that the ACK sound wave signal be not transmitted. When the terminal apparatus 100a receives the NACK sound wave signal, or when a predetermined period of time has elapsed since transmission of the connection request sound wave signal (that is, when this is regarded as timeout), the terminal apparatus 100a may select the base station apparatus 100b having the second highest priority, and transmit the connection request sound wave signal to the selected base station apparatus 100b.

In a sound wave communication region, the positioning sound wave signal, the broadcast sound wave signal, and the connection sound wave signal may be subjected to time-division multiplexing (TDM). The positioning sound wave signal, the broadcast sound wave signal, and the connection sound wave signal may be subjected to frequency-division multiplexing (FDM). Alternatively, the positioning sound wave signal, the broadcast sound wave signal, and the connection sound wave signal may be subjected to code-division multiplexing (CDM). The broadcast sound wave signal of each base station apparatus 100b may be subjected to time-division multiplexing. Alternatively, the broadcast sound wave signal may be subjected to frequency-division multiplexing. Alternatively, the broadcast sound wave signal may be subjected to code-division multiplexing using an orthogonal code sequence specific to each communication apparatus 100.

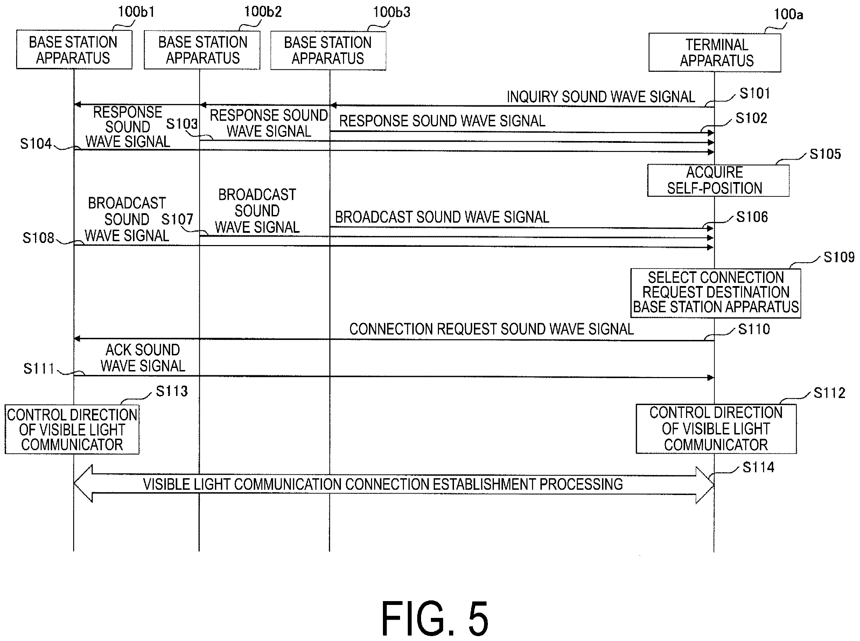

FIG. 5 is a diagram illustrating an operation flow example of the communication apparatus 100 according to the first embodiment. In the present operation flow example, each base station apparatus 100b has acquired the self-position in advance.

In Step S101, the terminal apparatus 100a transmits the inquiry sound wave signal to each base station apparatus 100b. The terminal apparatus 100a may transmit the inquiry sound wave signal, with a trigger being occurrence of the need to perform data communication, for example, occurrence of communication data (for example, sensing data) in the terminal apparatus 100a to be transmitted to the network side.

In Step S102, the base station apparatus 100b3 that has received the inquiry sound wave signal transmits the response sound wave signal to the terminal apparatus 100a. In Step S103, the base station apparatus 100b2 that has received the inquiry sound wave signal transmits the response sound wave signal to the terminal apparatus 100a. In Step S104, the base station apparatus 100b1 that has received the inquiry sound wave signal transmits the response sound wave signal to the terminal apparatus 100a. In this manner, in the first embodiment, each base station apparatus 100b functions as an LBL transponder.

In Step S105, the terminal apparatus 100a acquires the self-position using LBL, based on results of Steps S101 to S 104.

In Step S106, the base station apparatus 100b3 transmits the broadcast sound wave signal to the terminal apparatus 100a. In Step S107, the base station apparatus 100b2 transmits the broadcast sound wave signal to the terminal apparatus 100a. In Step S108, the base station apparatus 100b1 transmits the broadcast sound wave signal to the terminal apparatus 100a. Note that each base station apparatus 100b may transmit the broadcast sound wave signal, with a trigger being reception of the inquiry sound wave signal from the terminal apparatus 100a. In this case, each base station apparatus 100b may transmit the broadcast sound wave signal only once. Alternatively, each base station apparatus 100b may periodically transmit the broadcast sound wave signal only in a certain period of time since reception of the inquiry sound wave signal. Thus, power consumption can be reduced as compared to when the broadcast sound wave signal is periodically transmitted at all times.

The terminal apparatus 100a receives the broadcast sound wave signal from each base station apparatus 100b, and thereby acquires the position of each base station apparatus 100b.

In Step S109, the terminal apparatus 100a selects the base station apparatus 100b to be the target communication apparatus (that is, a connection request destination). Here, the description will continue based on the assumption that the terminal apparatus 100a selects the base station apparatus 100b1 as the target communication apparatus.

In Step S110, the terminal apparatus 100a transmits the connection request sound wave signal to the base station apparatus 100b1. The connection request sound wave signal includes the base station ID of the base station apparatus 100b1 as a destination and includes the terminal position information of the terminal apparatus 100a.

In Step S111, the base station apparatus 100b1 transmits the ACK sound wave signal to the terminal apparatus 100a. The ACK sound wave signal includes the terminal ID of the terminal apparatus 100a as a destination.

In Step S112, the terminal apparatus 100a controls the visible light communicator 110a to direct the visible light communication direction at the base station apparatus 100b1, based on the self-position acquired in Step S105 and the position of the base station apparatus 100b1 acquired in Step S108.

In Step S113, the base station apparatus 100b1 controls the visible light communicator 110b to direct the visible light communication direction at the terminal apparatus 100a, based on the self-position acquired in advance and the position of the terminal apparatus 100a acquired in Step S110.

In Step S114, the base station apparatus 100b1 and the terminal apparatus 100a perform processing of establishing visible light communication connection. Here, each of the base station apparatus 100b1 and the terminal apparatus 100a sets the initial transmit power of the visible light signal, based on the distance between the base station apparatus 100b1 and the terminal apparatus 100a. When visible light communication connection is established, the base station apparatus 100b1 and the terminal apparatus 100a transmit and receive communication data through visible light communication.

### (1.4) First Variation of First Embodiment

The communication apparatus 100 according to a first variation of the first embodiment will be described mainly regarding differences from the first embodiment described above. In the present variation, the LBL reference point is present outside the base station apparatus 100b. That is, a positioning communication apparatus as the LBL reference point is provided separately from the base station apparatus 100b.

In the present variation, the sound wave communicator 120 of the communication apparatus 100 transmits the inquiry sound wave signal to a plurality of positioning communication apparatuses, and receives the response sound wave signal from each positioning communication apparatus that has received the inquiry sound wave signal. The controller 130 of the communication apparatus 100 acquires the self-position, based on the round-trip propagation time from each positioning communication apparatus 200 determined according to reception of the response sound wave signal.

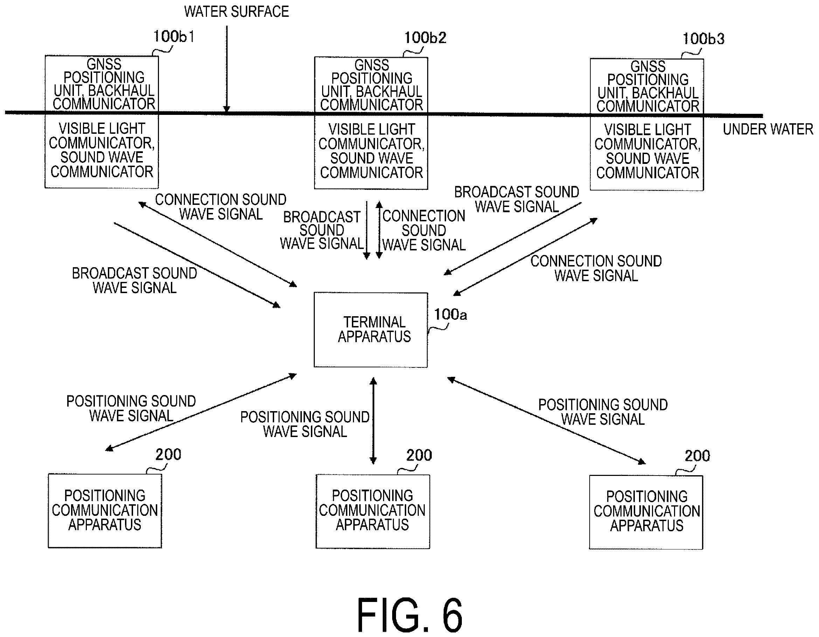

FIG. 6 is a diagram illustrating an operation scenario example of the communication apparatus 100 according to the first variation of the first embodiment.

In the example of FIG. 6, a plurality of positioning communication apparatuses 200 are located under the water. Each positioning communication apparatus 200 includes a sound wave communicator, and functions as an LBL reference point and transponder. Note that a part of the plurality of positioning communication apparatuses 200 may be integrated with any one of the base station apparatuses 100b (see the first embodiment).

In the present variation, the terminal apparatus 100a transmits and receives the LBL positioning sound wave signal to and from each positioning communication apparatus 200. Specifically, the terminal apparatus 100a transmits the inquiry sound wave signal to each positioning communication apparatus 200, receives the response sound wave signal from each positioning communication apparatus 200, and thereby acquires the round-trip propagation time from each positioning communication apparatus 200. Then, the terminal apparatus 100a acquires the self-position, based on the acquired round-trip propagation time. Note that, in the present variation, the base station apparatus 100b may be movable. The base station apparatus 100b may transmit and receive the positioning sound wave signal to and from each positioning communication apparatus 200, and thereby acquire the self-position.

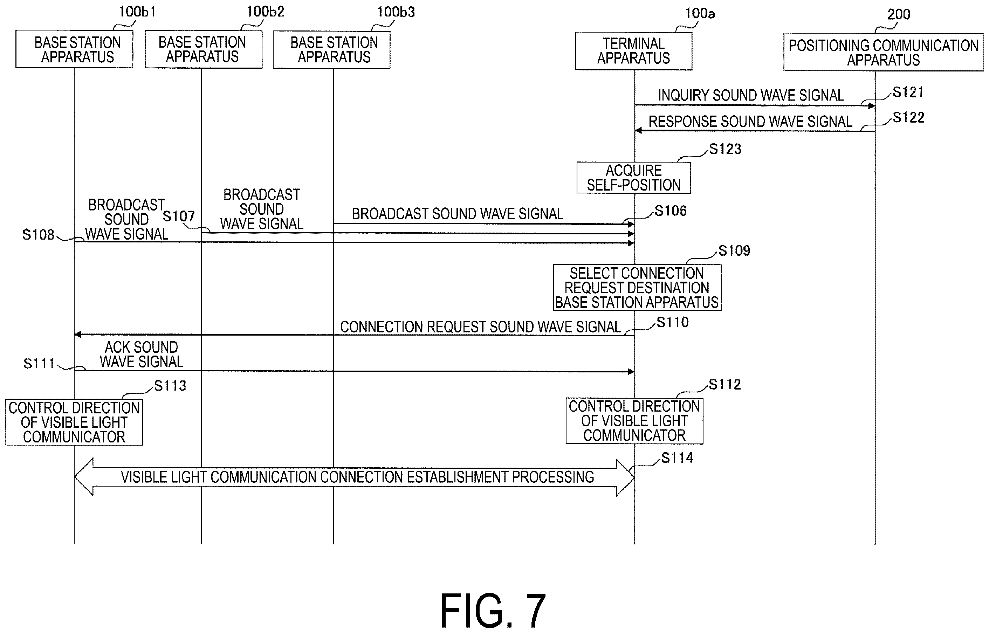

FIG. 7 is a diagram illustrating an operation flow example of the communication apparatus 100 according to the first variation of the first embodiment. In the present operation flow example, each base station apparatus 100b has acquired the self-position in advance.

In Step S121, the terminal apparatus 100a transmits the inquiry sound wave signal to each positioning communication apparatus 200.

In Step S122, each positioning communication apparatus 200 that has received the inquiry sound wave signal transmits the response sound wave signal to the terminal apparatus 100a.

In Step S123, the terminal apparatus 100a acquires the self-position using LBL, based on results of Steps S121 and S122.

Subsequent operation is the same as and/or similar to that of the first embodiment described above.

### (1.5) Second Variation of First Embodiment

The communication apparatus 100 according to a second variation of the first embodiment will be described mainly regarding differences from the first embodiment described above. In the present variation, a position management communication apparatus that manages the position of each communication apparatus 100 is provided. The sound wave communicator 120 of the communication apparatus 100 receives the sound wave signal including the position information indicating the position of the target communication apparatus from the position management communication apparatus.

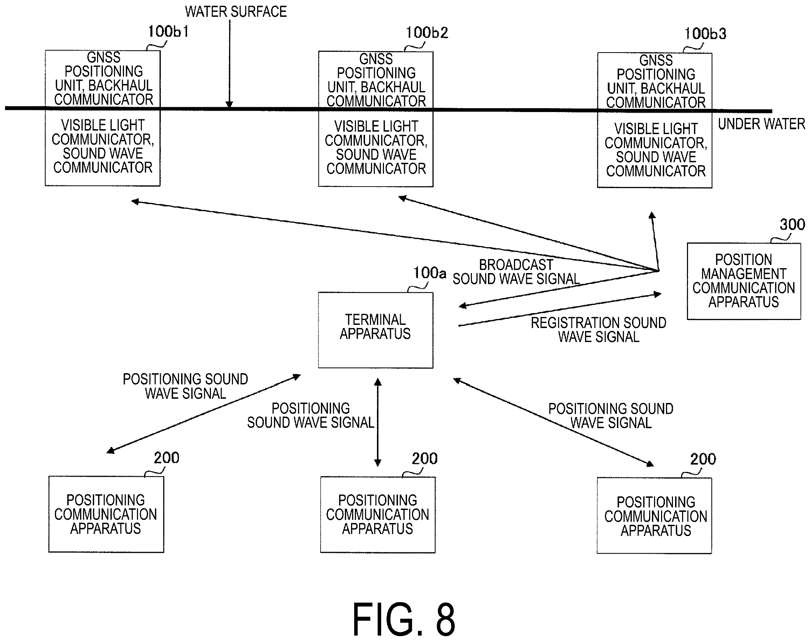

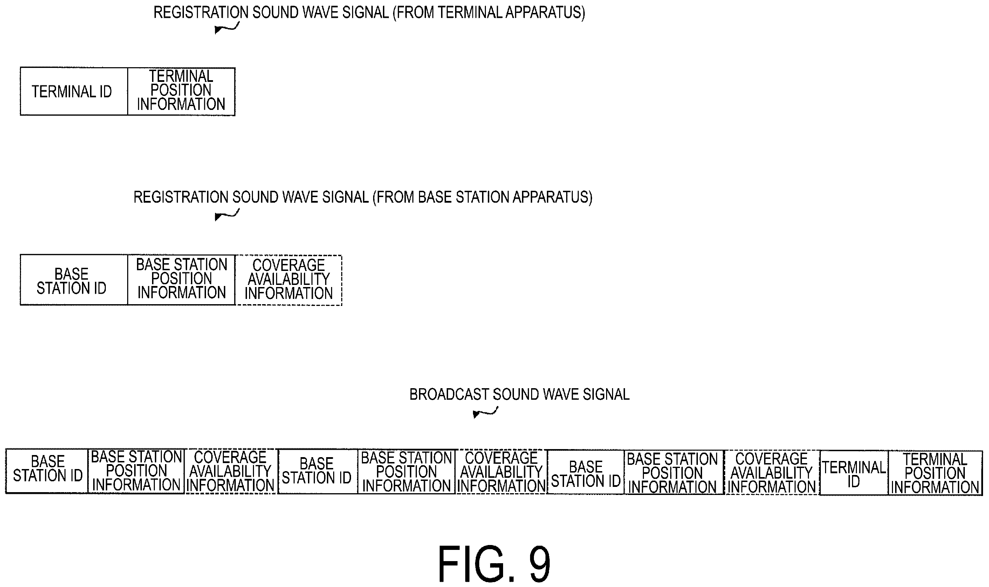

FIG. 8 is a diagram illustrating an operation scenario example of the communication apparatus 100 according to the second variation of the first embodiment. FIG. 9 is a diagram illustrating contents (formats) of sound wave signals transmitted and received in the present operation scenario example.

In the example of FIG. 8, a plurality of positioning communication apparatuses 200 and the position management communication apparatus 300 are located under the water. The positioning communication apparatus 200 is the same as and/or similar to that of the first variation described above. The position management communication apparatus 300 includes a sound wave communicator, and performs sound wave communication with the terminal apparatus 100a and the base station apparatus 100b.

Firstly, the terminal apparatus 100a acquires the self-position, using the positioning communication apparatus 200, in a manner the same as and/or similar to the first variation described above. The base station apparatus 100b may also acquire the self-position, using the positioning communication apparatus 200. Thus, the base station apparatus 100b may be movable.

Secondly, the terminal apparatus 100a transmits a registration sound wave signal including the terminal position information to the position management communication apparatus 300. For example, as illustrated in FIG. 9, the registration sound wave signal from the terminal apparatus 100a includes the terminal ID of the terminal apparatus 100a and the terminal position information of the terminal apparatus 100a. The registration sound wave signal may further include an ID of the position management communication apparatus 300 as a destination.

Each base station apparatus 100b may transmit the registration sound wave signal including the base station position information to the position management communication apparatus 300. For example, as illustrated in FIG. 9, the registration sound wave signal from the base station apparatus 100b includes the base station ID of the base station apparatus 100b, the base station position information of the base station apparatus 100b, and the accommodation availability information of the base station apparatus 100b. Note that, under the assumption that each base station apparatus 100b is fixed, the position management communication apparatus 300 may acquire the position of each base station apparatus 100b in advance. In that case, the position management communication apparatus 300 may not need to require the registration sound wave signal from the base station apparatus 100b. Alternatively, the base station apparatus 100b may transmit the registration sound wave signal including the base station ID and the accommodation availability information without including the base station position information.

Thirdly, the position management communication apparatus 300 transmits the broadcast sound wave signal including the position information of each communication apparatus 100, based on information of each communication apparatus 100 managed by the position management communication apparatus 300. For example, as illustrated in FIG. 9, the broadcast sound wave signal according to the present variation includes the base station ID, the base station position information, and the accommodation availability information of each base station apparatus 100b and the terminal ID and the terminal position information of the terminal apparatus 100a.

The terminal apparatus 100a receives the broadcast sound wave signal from the position management communication apparatus 300, and thereby acquires the position (and terminal accommodation availability) of each base station apparatus 100b. Each base station apparatus 100b receives the broadcast sound wave signal from the position management communication apparatus 300, and thereby acquires the position of the terminal apparatus 100a. Thus, in the present variation, the connection request sound wave signal transmitted by the terminal apparatus 100a may not need to include the terminal position information of the terminal apparatus 100a.

In the present variation, in the sound wave communication region, the positioning sound wave signal, the registration sound wave signal, the broadcast sound wave signal, and the connection sound wave signal may be subjected to time-division multiplexing (TDM). The positioning sound wave signal, the registration sound wave signal, the broadcast sound wave signal, and the connection sound wave signal may be subjected to frequency-division multiplexing (FDM). Alternatively, the positioning sound wave signal, the registration sound wave signal, the broadcast sound wave signal, and the connection sound wave signal may be subjected to code-division multiplexing (CDM). The registration sound wave signal of each communication apparatus 100 may be subjected to time-division multiplexing. Alternatively, the registration sound wave signal of each communication apparatus 100 may be subjected to frequency-division multiplexing. Alternatively, the registration sound wave signal of each communication apparatus 100 may be subjected to code-division multiplexing using an orthogonal code sequence specific to each communication apparatus 100.

In the present variation, when a state of the terminal accommodation availability changes, specifically, when each base station apparatus 100b becomes unable to newly accommodate a terminal apparatus 100a or each base station apparatus 100b becomes able to newly accommodate a terminal apparatus 100a, each base station apparatus 100b may transmit the registration sound wave signal including the accommodation availability information indicating the changed state of the terminal accommodation availability to the position management communication apparatus 300. When each base station apparatus 100b determines that the position of each base station apparatus 100b is changed, each base station apparatus 100b may transmit the registration sound wave signal to the position management communication apparatus 300.

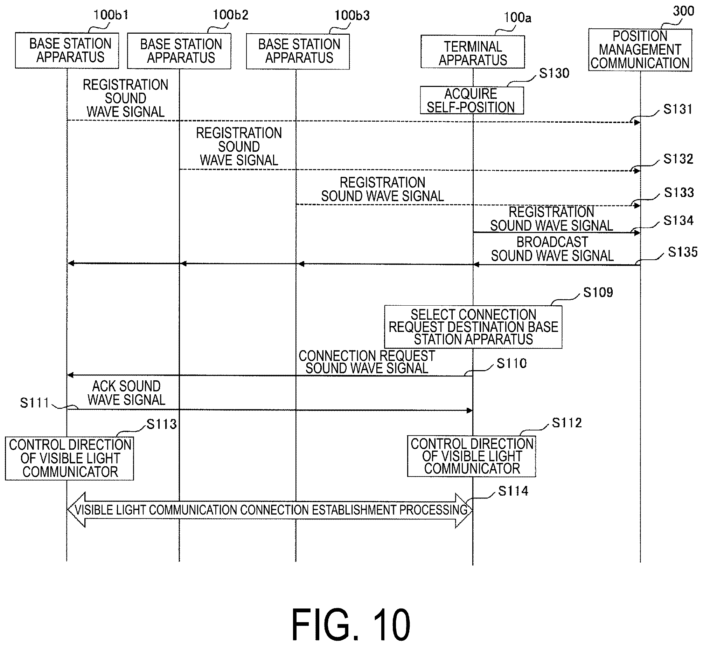

FIG. 10 is a diagram illustrating an operation flow example of the communication apparatus 100 according to the second variation of the first embodiment. In the present operation flow example, each base station apparatus 100b has acquired the self-position in advance.

In Step S130, the terminal apparatus 100a acquires the self-position, in a manner the same as and/or similar to the first variation described above.

In Step S131, the base station apparatus 100b1 transmits the registration sound wave signal to the position management communication apparatus 300. In Step S132, the base station apparatus 100b2 transmits the registration sound wave signal to the position management communication apparatus 300. In Step S133, the base station apparatus 100b3 transmits the registration sound wave signal to the position management communication apparatus 300. The position management communication apparatus 300 acquires the position and/or the terminal accommodation availability of each base station apparatus 100b, based on the registration sound wave signal from each base station apparatus 100b.

In Step S134, the terminal apparatus 100a transmits the registration sound wave signal to the position management communication apparatus 300. The position management communication apparatus 300 acquires the position of the terminal apparatus 100a, based on the registration sound wave signal from the terminal apparatus 100a.

In Step S135, the position management communication apparatus 300 transmits the broadcast sound wave signal. The terminal apparatus 100a receives the broadcast sound wave signal, and thereby acquires the position of each base station apparatus 100b. Each base station apparatus 100b receives the broadcast sound wave signal, and thereby acquires the position of the terminal apparatus 100a.

Subsequent operation is the same as and/or similar to that of the first embodiment described above. Note that the connection request sound wave signal transmitted from the terminal apparatus 100a to the base station apparatus 100b1 in Step S110 may include the identifier (destination) of the base station apparatus 100b1 and the identifier (transmission source) of the terminal apparatus 100a without including the position information of the terminal apparatus 100a.

### (1.6) Third Variation of First Embodiment

The communication apparatus 100 according to a third variation of the first embodiment will be described mainly regarding differences from the first embodiment described above. In the present variation, the sound wave communicator 120a of the terminal apparatus 100a receives a positioning reference signal transmitted from each base station apparatus 100b in synchronization with the base station apparatuses 100b as the sound wave signal. The controller 130a of the terminal apparatus 100a acquires the position of the terminal apparatus 100a, based on the received positioning reference signal.

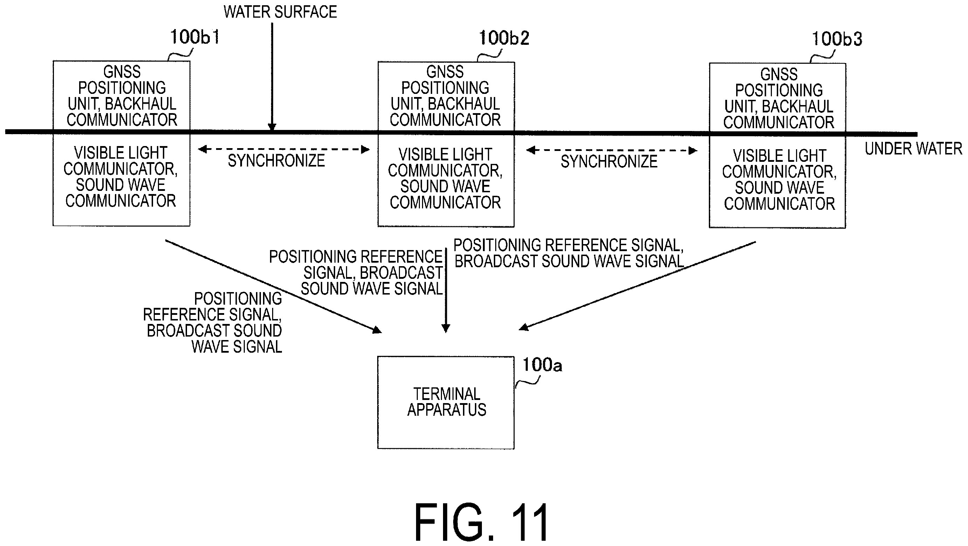

FIG. 11 is a diagram illustrating an operation scenario example of the communication apparatus 100 according to the second variation of the first embodiment.

In the present variation, each base station apparatus 100b transmits the positioning reference signal as the sound wave signal in synchronization with each other. Thus, the terminal apparatus 100a can acquire the self-position on reference point coordinates with each base station apparatus 100b being a reference point, based on a difference of arrival times of the positioning reference signals. Thus, transmission and reception of the LBL positioning sound wave signals (the inquiry sound wave signal and the response sound wave signal) as described above are unnecessary.

Note that each base station apparatus 100b may transmit the positioning reference signal at all times, separately from the broadcast sound wave signal. Each base station apparatus 100b may configure the positioning reference signal using an orthogonal sequence with the base station ID of each base station apparatus 100b being a seed. Thus, the terminal apparatus 100a can acquire the base station ID based on the positioning reference signal, and can thus associate the positioning reference signal and the broadcast sound wave signal based on the base station ID.

In the present variation, in the sound wave communication region, the positioning reference signal, the broadcast sound wave signal, and the connection sound wave signal may be subjected to time-division multiplexing (TDM). The positioning sound wave signal, the registration sound wave signal, the broadcast sound wave signal, and the connection sound wave signal may be subjected to frequency-division multiplexing (FDM). Alternatively, the positioning sound wave signal, the registration sound wave signal, the broadcast sound wave signal, and the connection sound wave signal may be subjected to code-division multiplexing (CDM).

Note that the positioning reference signal may be made common to the broadcast sound wave signal. In this case, each base station apparatus 100b may simultaneously transmit the broadcast sound wave signal, using an orthogonal code sequence.

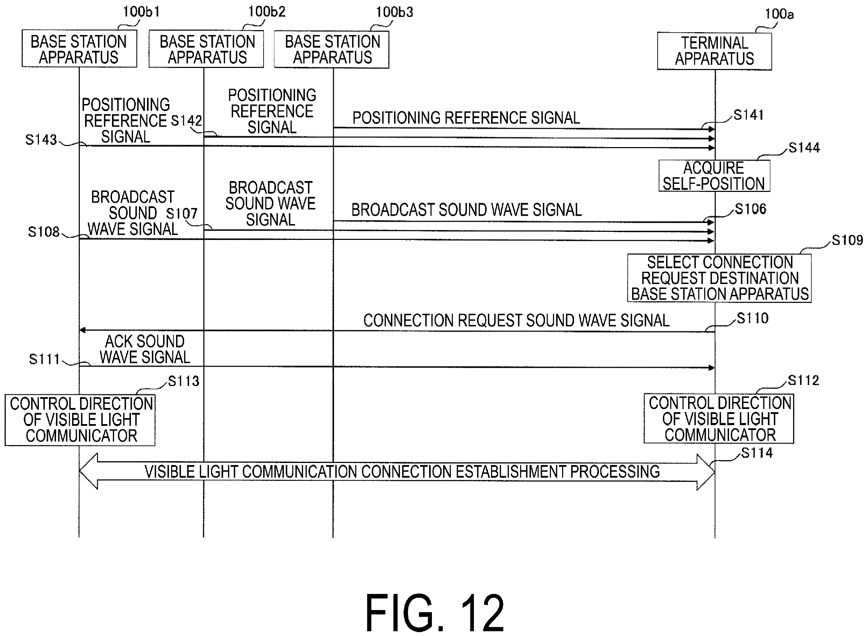

FIG. 12 is a diagram illustrating an operation flow example of the communication apparatus 100 according to the third variation of the first embodiment. In the present operation flow example, each base station apparatus 100b has acquired the self-position in advance.

In Steps S141 to S143, the base station apparatuses 100b1 to 100b3 transmit the positioning reference signals as the sound wave signals.

In Step S144, the terminal apparatus 100a acquires the self-position, based on the positioning reference signals received from the base station apparatuses 100b1 to 100b3.

Subsequent operation is the same as and/or similar to that of the first embodiment described above.

### (2) Second Embodiment

A second embodiment will be described mainly regarding differences from the first embodiment described above. In the first embodiment described above, the visible light communication direction is controlled by acquiring the position of each communication apparatus 100, whereas in the second embodiment, the visible light communication direction is controlled by acquiring a direction of arrival of the sound wave signal from the target communication apparatus instead of acquiring the position of each communication apparatus 100.

In the communication apparatus 100 according to the second embodiment, the sound wave communicator 120 receives the sound wave signal transmitted from the target communication apparatus. The controller 130 estimates a direction of arrival of the sound wave signal, based on the sound wave signal received by the sound wave communicator 120. Then, the controller 130 controls the visible light communicator 110 to make the visible light communication direction (for example, the optical axis direction) match the direction of arrival. Thus, the visible light communication direction can be appropriately directed at the target communication apparatus.

In the second embodiment, the wave receiver 122 of the sound wave communicator 120 of the communication apparatus 100 includes a wave receiving array consisting of wave receiving devices located at intervals similar to a wavelength of sound waves. The controller 130 acquires an angle of arrival (direction of arrival) of the sound wave signal as a phase difference between the wave receiving devices. A method using such a method is also referred to as an Ultra Short Base Line (USBL) method.

In the second embodiment, the controller 130 of the communication apparatus 100 may acquire the distance between the target communication apparatus and the communication apparatus 100, based on an attenuation amount calculated from transmit power of the sound wave signal in the target communication apparatus and receive power of the sound wave signal received by the sound wave communicator 120. Then, the controller 130 may control the initial transmit power of the visible light signal in visible light communication, based on the acquired distance.

The sound wave communicator 120 of the communication apparatus 100 may receive the sound wave signal from each of the plurality of candidate communication apparatuses. The controller 130 may acquire the distance between each candidate communication apparatus and the communication apparatus 100 based on the attenuation amount, and select the target communication apparatus out of the plurality of candidate communication apparatuses based on the acquired distance.

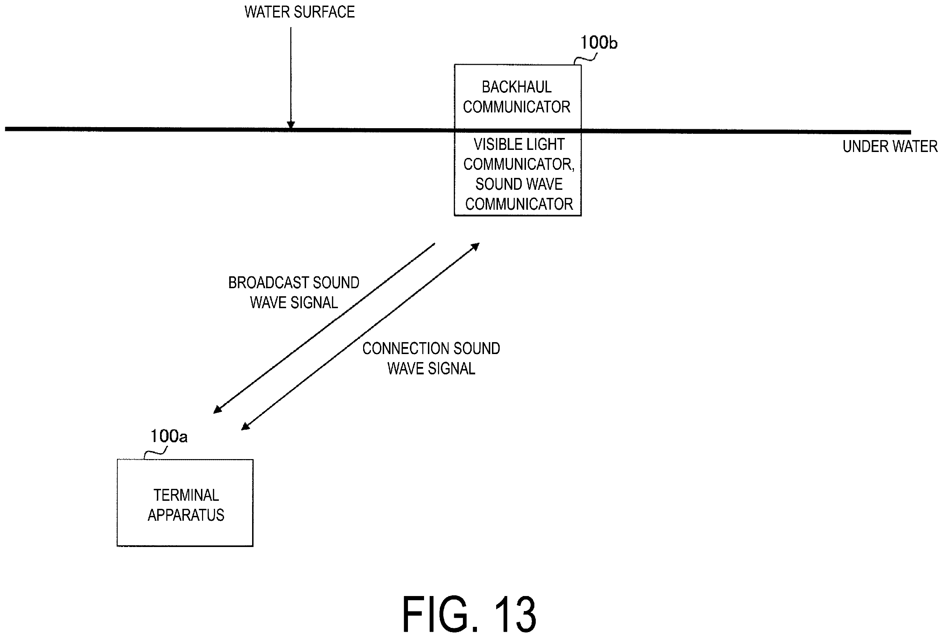

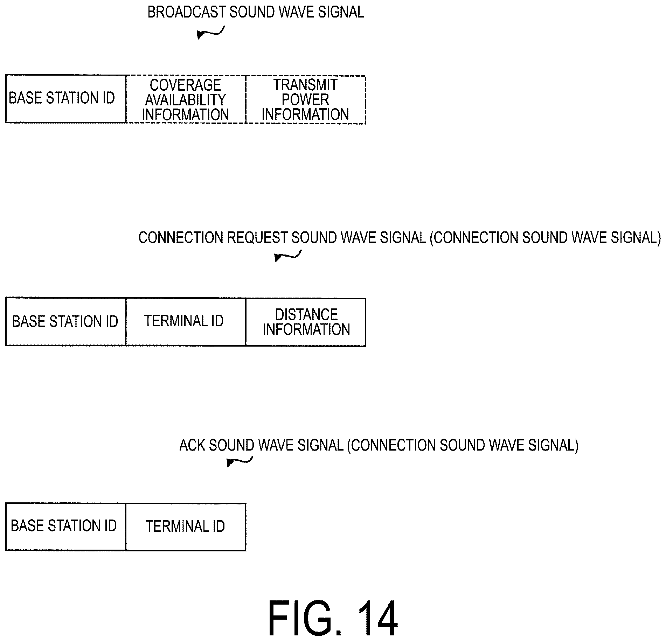

FIG. 13 is a diagram illustrating an operation scenario example of the communication apparatus 100 according to the second embodiment. FIG. 14 is a diagram illustrating contents (formats) of sound wave signals transmitted and received in the present operation scenario example.

In the present operation scenario example, the base station apparatus 100b is on the water surface. Specifically, in the base station apparatus 100b, the visible light communicator 110b and the sound wave communicator 120b are under the water (below the water surface), and the backhaul communicator 140 is over the water (over the water surface). The base station apparatus 100b may not need to include the GNSS positioning unit 150. In the second embodiment, the visible light communication direction is controlled by acquiring the direction of arrival of the sound wave signal, and thus the base station apparatus 100b may be movable. The terminal apparatus 100a is under the water.

Firstly, the base station apparatus 100b transmits the broadcast sound wave signal. In the second embodiment, as illustrated in FIG. 14, the broadcast sound wave signal includes the base station ID of the base station apparatus 100b, the accommodation availability information of the base station apparatus 100b, and transmit power information indicating the transmit power of the broadcast sound wave signal. Note that, when the transmit power of the broadcast sound wave signal is known (fixed), the broadcast sound wave signal may not need to include the transmit power information.

The terminal apparatus 100a receives the broadcast sound wave signal, and acquires the direction of arrival of the broadcast sound wave signal. The terminal apparatus 100a acquires the distance between the base station apparatus 100b and the terminal apparatus 100a, based on an attenuation amount calculated from the transmit power of the broadcast sound wave signal and receive power of the broadcast sound wave signal.

The terminal apparatus 100a may receive the broadcast sound wave signal from each of the plurality of base station apparatuses 100b. The terminal apparatus 100a may acquire the distance between each base station apparatus 100b and the terminal apparatus 100a, and select the target communication apparatus out of the plurality of base station apparatuses 100b, based on the acquired distance.

Secondly, the terminal apparatus 100a transmits and receives the connection sound wave signal to and from the base station apparatus 100b (target communication apparatus). For example, the terminal apparatus 100a transmits the connection request sound wave signal to the base station apparatus 100b, and receives the ACK sound wave signal from the base station apparatus 100b.

In the second embodiment, as illustrated in FIG. 14, the connection request sound wave signal includes the base station ID of the base station apparatus 100b (that is, the destination of the connection request sound wave signal) selected by the terminal apparatus 100a, the terminal ID of the terminal apparatus 100a (that is, the transmission source of the connection request sound wave signal), and distance information indicating the distance between the base station apparatus 100b and the terminal apparatus 100a. The distance information is used by the base station apparatus 100b to control the initial transmit power of the visible light signal. As illustrated in FIG. 14, the ACK sound wave signal includes the base station ID of the base station apparatus 100b being a transmission source of the ACK sound wave signal and the terminal ID of the terminal apparatus 100a being a destination of the ACK sound wave signal.

Here, the base station apparatus 100b receives the connection request sound wave signal from the terminal apparatus 100a, and acquires the direction of arrival of the broadcast sound wave signal. The base station apparatus 100b acquires the distance between the base station apparatus 100b and the terminal apparatus 100a, based on the distance information included in the connection request sound wave signal.

Thirdly, the terminal apparatus 100a controls the visible light communicator 110a to make the visible light communication direction match the direction of arrival, based on the direction of arrival estimated regarding the broadcast sound wave signal. The base station apparatus 100b controls the visible light communicator 110b to make the visible light communication direction match the direction of arrival, based on the direction of arrival estimated regarding the connection request sound wave signal. As a result, visible light communication connection is established between the base station apparatus 100b and the terminal apparatus 100a. When visible light communication connection is established, the base station apparatus 100b and the terminal apparatus 100a transmit and receive communication data through visible light communication.

In the sound wave communication region, the broadcast sound wave signal and the connection sound wave signal may be subjected to time-division multiplexing (TDM). The broadcast sound wave signal and the connection sound wave signal may be subjected to frequency-division multiplexing (FDM). Alternatively, the broadcast sound wave signal and the connection sound wave signal may be subjected to code-division multiplexing (CDM). The broadcast sound wave signal of each base station apparatus 100b may be subjected to time-division multiplexing. Alternatively, the broadcast sound wave signal of each base station apparatus 100b may be subjected to frequency-division multiplexing. Alternatively, the broadcast sound wave signal of each base station apparatus 100b may be subjected to code-division multiplexing using an orthogonal code sequence specific to each base station apparatus 100b.

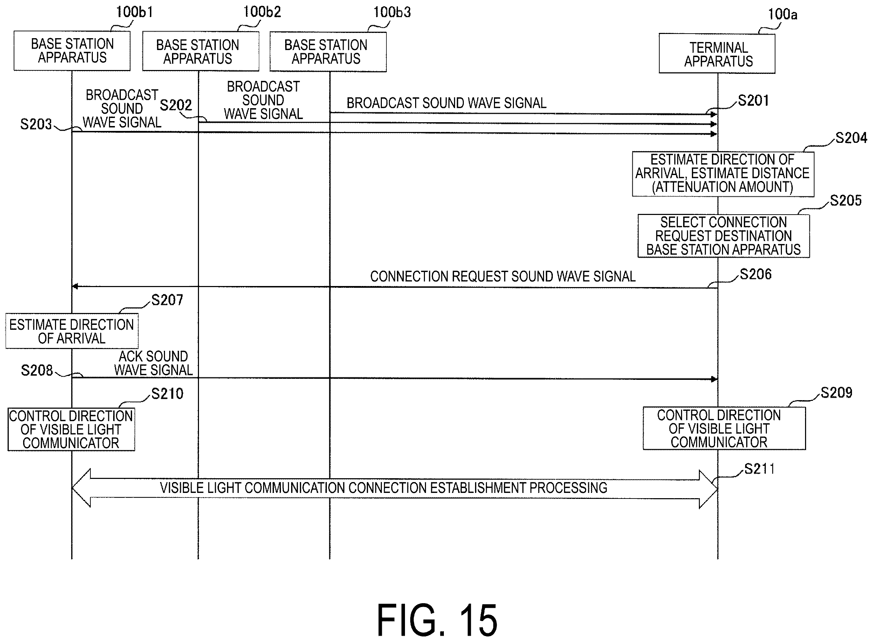

FIG. 15 is a diagram illustrating an operation flow example of the communication apparatus 100 according to the second embodiment. Here, the terminal apparatus 100a receives the broadcast sound wave signal from three base station apparatuses 100b.

In Step S201, the base station apparatus 100b3 transmits the broadcast sound wave signal to the terminal apparatus 100a. In Step S202, the base station apparatus 100b2 transmits the broadcast sound wave signal to the terminal apparatus 100a. In Step S203, the base station apparatus 100b1 transmits the broadcast sound wave signal to the terminal apparatus 100a.

In Step S204, the terminal apparatus 100a estimates the direction of arrival of the broadcast sound wave signal from each base station apparatus 100b. The terminal apparatus 100a acquires (estimates) the distance between the terminal apparatus 100a and each base station apparatus 100b, based on the attenuation amount of the broadcast sound wave signal from each base station apparatus 100b. Note that the terminal apparatus 100a may receive the broadcast sound wave signal from each base station apparatus 100b a plurality of times and perform estimation of the direction of arrival regarding each base station apparatus 100b a plurality of times, to thereby perform processing for enhancing estimation accuracy of the direction of arrival.

In Step S205, the terminal apparatus 100a selects the base station apparatus 100b to be the target communication apparatus (that is, the connection request destination). The terminal apparatus 100a may preferentially select the base station apparatus 100b having the shortest distance from the terminal apparatus 100a as the target communication apparatus. The terminal apparatus 100a may extract the base station apparatus 100b that can accommodate the terminal apparatus 100a based on the broadcast sound wave signal from each base station apparatus 100b, and select the extracted base station apparatus 100b as the target communication apparatus. Here, the description will continue based on the assumption that the terminal apparatus 100a selects the base station apparatus 100b1 as the target communication apparatus.

In Step S206, the terminal apparatus 100a transmits the connection request sound wave signal to the base station apparatus 100b1. The connection request sound wave signal includes the base station ID of the base station apparatus 100b1 as a destination and includes the distance information indicating the distance between the base station apparatus 100b1 and the terminal apparatus 100a.

In Step S207, the base station apparatus 100b1 receives the connection request sound wave signal, and estimates the direction of arrival of the connection request sound wave signal.

In Step S208, the base station apparatus 100b1 transmits the ACK sound wave signal to the terminal apparatus 100a. The ACK sound wave signal includes the terminal ID of the terminal apparatus 100a as a destination. Note that, considering that the base station apparatus 100b1 may move, the terminal apparatus 100a may estimate the direction of arrival of the ACK sound wave signal. When the direction of arrival of the ACK sound wave signal is changed with respect to the direction of arrival estimated in Step S204, the terminal apparatus 100a may control the visible light communication direction, using the direction of arrival of the ACK sound wave signal.

In Step S209, the terminal apparatus 100a controls the visible light communicator 110a to make the visible light communication direction match the direction of arrival, based on the estimated direction of arrival.

In Step S210, the base station apparatus 100b1 controls the visible light communicator 110b to make the visible light communication direction match the direction of arrival, based on the direction of arrival estimated in Step S207.

In Step S211, the base station apparatus 100b1 and the terminal apparatus 100a perform processing of establishing visible light communication connection. Here, each of the base station apparatus 100b1 and the terminal apparatus 100a sets the initial transmit power of the visible light signal, based on the distance between the base station apparatus 100b1 and the terminal apparatus 100a. When visible light communication connection is established, the base station apparatus 100b1 and the terminal apparatus 100a transmit and receive communication data through visible light communication.

Note that, in the second embodiment, the controller 130 of the communication apparatus 100 may calculate an evaluation value indicating estimation accuracy of the direction of arrival. Then, the controller 130 may control a movable range (also referred to as a "perturbation range") in adjusting the visible light communication direction (optical axis) in visible light communication, based on the calculated evaluation value. The evaluation value indicating the estimation accuracy of the direction of arrival may be, for example, a variance value and a variation amount of a direction when direction estimation using sound wave communication is performed a plurality of times. Specifically, when variance is small, the controller 130 may determine that accuracy of narrowing down the direction of arrival is high and narrow the perturbation range. The controller 130 may estimate a moving direction and a speed of the target communication apparatus from the variation in the direction, and when the moving speed is high, the controller 130 may extend the perturbation range in the moving direction of the target communication apparatus. In addition, when the evaluation value indicating the estimation accuracy of the direction of arrival is worse than a threshold, the controller 130 may perform estimation of the direction of arrival again (repeatedly).

### (3) Third Embodiment

A third embodiment will be described mainly regarding differences from the first and second embodiments described above. In the first and second embodiments described above, the terminal apparatus 100a selects the target communication apparatus (connection request destination), based on the distance from the base station apparatus 100b and/or the terminal accommodation availability of the base station apparatus 100b.

However, the base station apparatus 100b selected using such a selection method is not necessarily an optimal base station apparatus 100b from the viewpoint of a propagation environment in visible light communication. Because the terminal apparatus 100a cannot know a light propagation environment with the base station apparatus 100b until the terminal apparatus 100a establishes visible light communication connection to the selected base station apparatus 100b, the light propagation environment with the base station apparatus 100b may be of poor quality.

Thus, in the third embodiment, the terminal apparatus 100a selects the base station apparatus 100b as a connection request destination by taking the propagation environment into account, in addition to the base station selection method of the first and second embodiments described above or instead of the base station selection method. Note that the third embodiment can be used together with the first and second embodiments described above.

Specifically, in the third embodiment, the sound wave communicator 120a of the terminal apparatus 100a receives the sound wave signal including propagation environment information indicating the propagation environment that affects underwater visible light communication. The propagation environment information indicates turbidity and/or solar noise as the propagation environment. The controller 130a of the terminal apparatus 100a selects the base station apparatus 100b as a connection request destination out of the plurality of base station apparatuses 100b, based on the propagation environment information included in the received sound wave signal. Thus, an optimal base station apparatus 100b can be selected from the viewpoint of the propagation environment in visible light communication. Operation after the terminal apparatus 100a selects the base station apparatus 100b as a connection request destination is the same as and/or similar to that of the first and second embodiments described above.

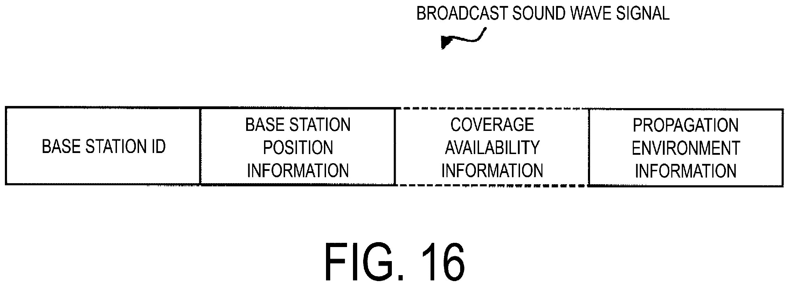

FIG. 16 is a diagram illustrating an example of contents (format) of the broadcast sound wave signal according to the third embodiment. The broadcast sound wave signal according to the third embodiment includes the base station ID of the base station apparatus 100b, the base station position information of the base station apparatus 100b, the accommodation availability information of the base station apparatus 100b, and the propagation environment information indicating the propagation environment regarding the base station apparatus 100b. The propagation environment information includes a value indicating turbidity and/or a value indicating solar noise. These values may be numerical values corresponding to measured values. Alternatively, these values may be index values, such as "high", "intermediate", and "low". Note that, when the third embodiment is used together with the second embodiment, the broadcast sound wave signal may include the transmit power information indicating the transmit power of the broadcast sound wave signal, instead of the base station position information.

The terminal apparatus 100a receives the broadcast sound wave signal as illustrated in FIG. 16 regarding a plurality of base station apparatuses 100b to acquire (estimate) the propagation environment of each base station apparatus 100b, and selects the base station apparatus 100b as a connection request destination, based on the acquired propagation environment. Note that the broadcast sound wave signal may be transmitted from the base station apparatus 100b, or may be transmitted from the position management communication apparatus 300. In the latter case, each base station apparatus 100b may register the propagation environment information of each base station apparatus 100b with the position management communication apparatus 300, using the registration sound wave signal. The broadcast sound wave signal transmitted from the position management communication apparatus 300 may include the propagation environment information of each of the plurality of base station apparatuses 100b (see FIG. 9).

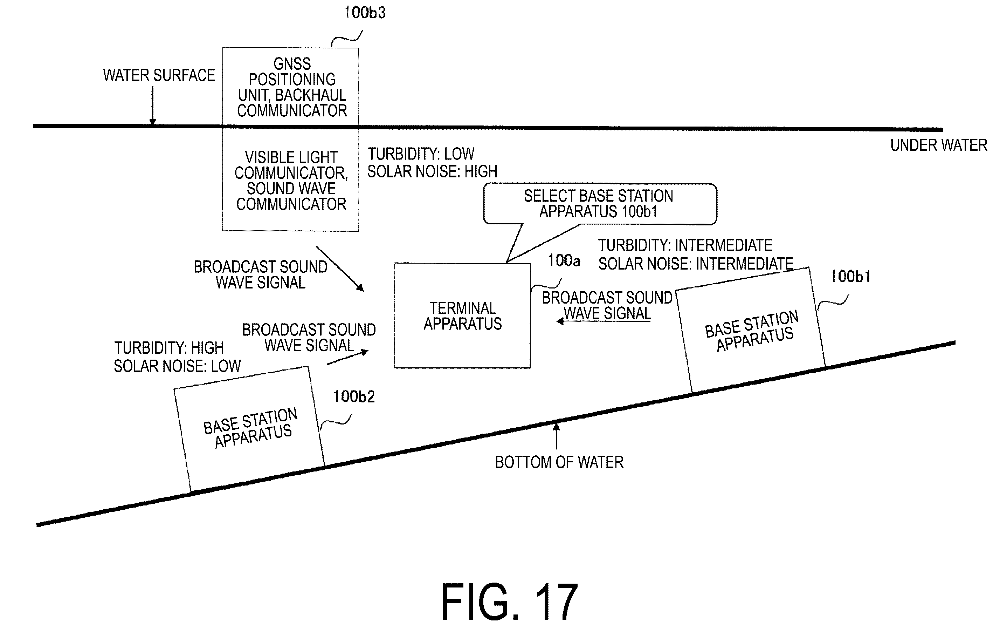

FIG. 17 is a diagram illustrating an operation scenario example of the communication apparatus 100 according to the third embodiment.

In the present operation scenario example, the base station apparatuses 100b1 and 100b2 are under the water (specifically, at the bottom of the water), and the base station apparatus 100b3 is on the water surface. The base station apparatus 100b1 is located at a position closer to the water surface than the base station apparatus 100b2. The terminal apparatus 100a is under the water. Here, each base station apparatus 100b includes a turbidity sensor and a solar noise sensor (for example, an illuminance sensor for measuring ambient light as noise). Each base station apparatus 100b is capable of newly accommodating a terminal apparatus 100a. Note that whatever that emits light may be noise as well as the solar noise, and thus any sensor that measures ambient light as noise may be used as well as the solar noise sensor.

The base station apparatus 100b1 transmits the broadcast sound wave signal including the propagation environment information indicating turbidity and solar noise measured by the base station apparatus 100b1. The measured turbidity is "intermediate", and the measured solar noise is "intermediate". The base station apparatus 100b2 transmits the broadcast sound wave signal including the propagation environment information indicating turbidity and solar noise measured by the base station apparatus 100b2. The measured turbidity is "high", and the measured solar noise is "low". In addition, the base station apparatus 100b3 transmits the broadcast sound wave signal including the propagation environment information indicating turbidity and solar noise measured by the base station apparatus 100b3. The measured turbidity is "low", and the measured solar noise is "high".

The terminal apparatus 100a that has received the broadcast sound wave signal from each base station apparatus 100b acquires the propagation environment of each base station apparatus 100b based on the propagation environment information included in each broadcast sound wave signal, and selects the base station apparatus 100b as a connection request destination based on the acquired propagation environment. **In** the example of FIG. 17, the terminal apparatus 100a determines that the base station apparatus 100b2 having "high" turbidity and the base station apparatus 100b3 having "high" solar noise are inappropriate as connection request destinations, and selects the base station apparatus 100b3 as a connection request destination.

The terminal apparatus 100a may select the base station apparatus 100b as a connection request destination, based on the distance between each base station apparatus 100b and the terminal apparatus 100a, in addition to the propagation environment of each base station apparatus 100b. A method of acquiring the distance may be a distance acquisition method based on the position as with the first embodiment. Alternatively, the method of acquiring the distance may be a distance acquisition method based on the attenuation amount as with the second embodiment.

For example, when two base station apparatuses 100b having the same turbidity and distance with different solar noises are present, the terminal apparatus 100a may select the base station apparatus 100b having the smaller solar noise out of the two base station apparatuses 100b.

As another example, when all of the following conditions 1 to 3 are satisfied, the terminal apparatus 100a may select a base station apparatus 100b (A) that is farther with respect to the distance instead of a base station apparatus 100b (B) that is closer with respect to the distance:
Condition 1: A distance (A) between the terminal apparatus 100a and the base station apparatus 100b (A) is larger than a distance (B) between the terminal apparatus 100a and the base station apparatus 100b (B), but a difference between the distance (A) and the distance (B) is equal to or less than a threshold;
Condition 2: The terminal apparatus 100a can communicate with the base station apparatus 100b (A) using maximum transmit power or less;
Condition 3: The propagation environment (turbidity and an amount of solar noise) regarding the base station apparatus 100b (A) is better than the propagation environment (turbidity and an amount of solar noise) regarding the base station apparatus 100b (B).

Note that, although the description in the third embodiment takes examples of turbidity and solar noise as the propagation environment that affects underwater visible light communication, chlorophyll concentration may further be considered in addition to the turbidity and the solar noise. In addition, the terminal apparatus 100a may select a color of visible light to be used in visible light communication, based on chlorophyll concentration. Thus, the terminal apparatus 100a can select an optimal color.

Although the third embodiment describes an example in which each base station apparatus 100b measures the propagation environment, another communication apparatus, for example, the positioning communication apparatus 200 (see FIG. 6) and/or the position management communication apparatus 300 (see FIG. 8), may also include a turbidity sensor and a solar noise sensor. Such another communication apparatus may notify the terminal apparatus 100a and/or the base station apparatus 100b of the measured propagation environment through sound wave communication.

### (3.1) First Variation of Third Embodiment

A first variation of the third embodiment will be described mainly regarding differences from the third embodiment described above. In the present variation, a recommended base station apparatus 100b as a connection request destination of the terminal apparatus 100a is selected on the network side.

Specifically, the sound wave communicator 120a of the terminal apparatus 100a receives the sound wave signal including recommended base station information indicating at least one base station apparatus 100b selected on the network side. The controller 130a of the terminal apparatus 100a selects the base station apparatus 100b as a connection request destination, based on the recommended base station information.

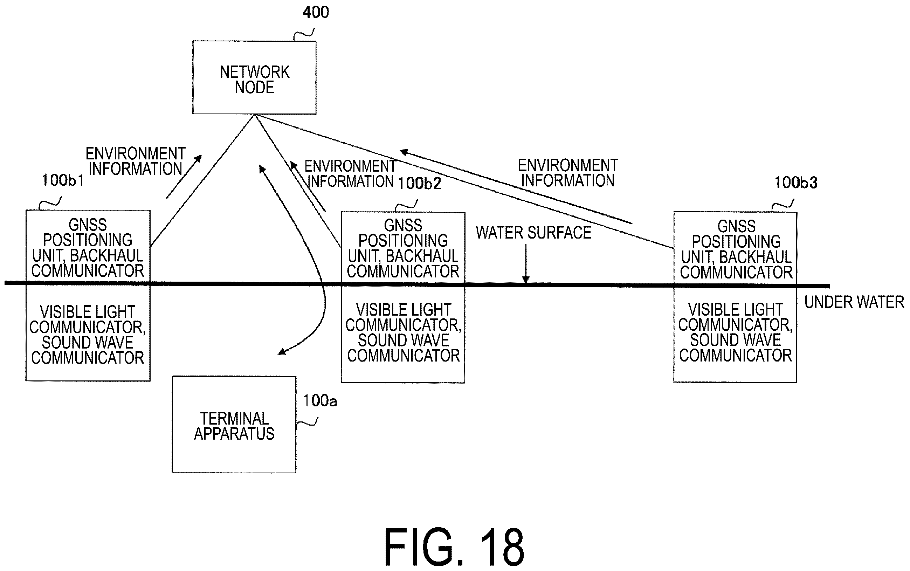

FIG. 18 is a diagram illustrating an operation scenario example of the communication apparatus 100 according to the first variation of the third embodiment.

Firstly, each base station apparatus 100b notifies a network node 400 of the measured propagation environment (turbidity and solar noise information). The network node 400 may be a node provided in a communication network. The network node 400 may be a node provided together with any one of the base station apparatuses 100b. The propagation environment information transmitted from each base station apparatus 100b to the network node 400 may be numerical values corresponding to measured values. The propagation environment information may be index values, such as "high", "intermediate", and "low". As timing of notification, the notification may be performed at timing when the turbidity and the solar noise measured by each base station apparatus 100b change or at periodic timing.

Secondly, the network node 400 generates or updates an environment information map, based on the propagation environment information from each base station apparatus 100b. The environment information map may be map information indicating correspondence between the position and the propagation environment.

Thirdly, the terminal apparatus 100a notifies the network node 400 of the position information and the connection request of the terminal apparatus 100a via any base station apparatus 100b located within a range capable of sound wave communication.

Fourthly, the network node 400 notifies the terminal apparatus 100a of the base station apparatus 100b that is preferable for the terminal apparatus 100a via the base station apparatus 100b. The terminal apparatus 100a may be notified of a single base station apparatus 100b or a list format arranged in descending order of preferability. Concerning the base station apparatuses 100b included in the list, a list not taking account of the terminal accommodation availability may be used, or a list except the base station apparatuses 100b incapable of accommodating a terminal may be used.

When the list not taking account of the terminal accommodation availability is used, the terminal apparatus 100a determines the terminal accommodation availability, based on the broadcast sound wave signal from each base station apparatus 100b. When the list except the base station apparatuses 100b incapable of accommodating a terminal is used, in response to change of the state of the terminal accommodation availability, each base station apparatus 100b may notify the network node 400 of such change (changed state). The notification may be performed together with or separately from the notification of the environment information. Each base station apparatus 100b may perform the notification in response to a request from the network node 400.

### (3.2) Second Variation of Third Embodiment

A second variation of the third embodiment will be described mainly regarding differences from the third embodiment and the first variation thereof described above. **In** the present variation, in a manner the same as and/or similar to the first variation of the third embodiment, the recommended base station apparatus 100b as a connection request destination of the terminal apparatus 100a is selected on the network side.

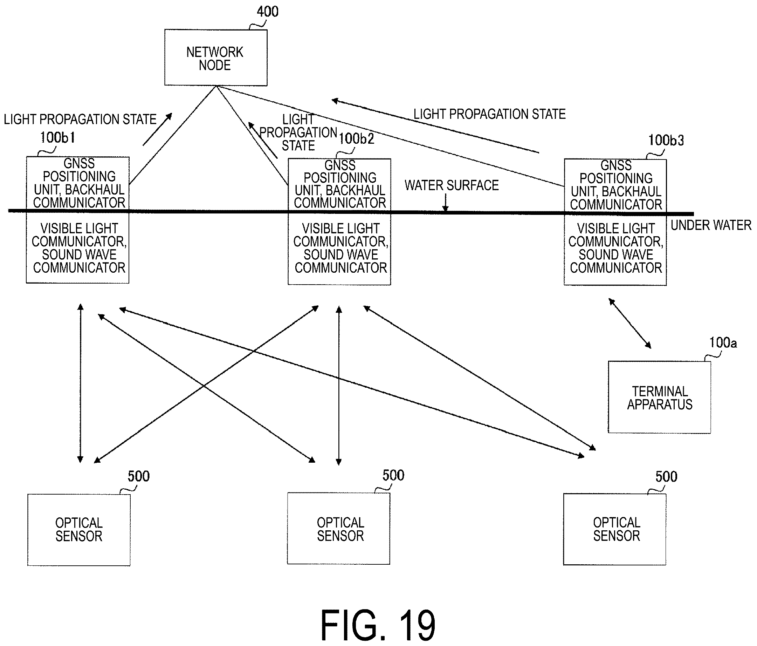

FIG. 19 is a diagram illustrating an operation scenario example of the communication apparatus 100 according to the second variation of the third embodiment. **In** the present variation, a large number of fixed optical sensors 500 having an optical communication function are arranged.

Firstly, each base station apparatus 100b periodically performs visible light communication with the optical sensors 500 at any timing, and thereby acquires a light propagation state between each base station apparatus 100b and known fixed points (optical sensors 500). The light propagation state may be information indicating the attenuation amount of the visible light signal, for example.

Here, the base station apparatus 100b in the middle of optical communication with the terminal apparatus 100a may request the position information from the terminal apparatus 100a at any timing, acquire the position information and the light propagation state of the terminal apparatus 100a, and notify the network node 400 of the acquired information. Alternatively, the terminal apparatus 100a may notify the network node 400 of the position information and the light propagation state of the terminal apparatus 100a. The notification may be performed via the connected base station apparatus 100b through visible light communication, or may be performed via any base station apparatus 100b through sound wave communication. These notifications may be provided with a timestamp indicating time at which the light propagation state is acquired.

Secondly, each base station apparatus 100b notifies the network node 400 that manages the light propagation state of the light propagation state and a corresponding position at any timing.

Thirdly, the network node 400 generates or updates a light propagation state map. The light propagation state map may be map information indicating correspondence between the position and the light propagation state.

Fourthly, the terminal apparatus 100a notifies the network node 400 of the position information and the connection request of the terminal apparatus 100a via any base station apparatus 100b located within a range capable of sound wave communication.

Fifthly, the network node 400 notifies the terminal apparatus 100a of the base station apparatus 100b that is preferable for the terminal apparatus 100a via the base station apparatus 100b.

### (4) Other Embodiments

The embodiments described above mainly describe an example in which the terminal apparatus 100a and the base station apparatus 100b perform underwater communication, but may assume the base station apparatuses performing underwater communication and/or the terminal apparatuses performing underwater communication. The embodiments described above describe an example in which the communication apparatus 100 performs underwater communication, but the communication apparatus 100 may also be capable of terrestrial or spatial communication as well as underwater communication.

The operation flows described above can be separately and independently implemented, and also be implemented in combination of two or more of the operation flows. For example, some steps of one operation flow may be added to another operation flow or some steps of one operation flow may be replaced with some steps of another operation flow. The order of steps in each operation flow described above is merely an example and may be changed as appropriate.

A program may be provided that causes a computer to execute each processing performed by the communication apparatus 100. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing each processing performed by the communication apparatus 100 may be integrated, and at least part of the communication apparatus 100 may be configured as a semiconductor integrated circuit (chipset, System on a chip (SoC)).

The phrases "based on" and "depending on" used in the present disclosure do not mean "based only on" and "depending only on," unless specifically stated otherwise. The phrase "based on" means both "based only on" and "based at least in part on". The phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

The present application claims priority to Japanese Patent Application No. 2022-060911 (filed on March 31, 2022), the contents of which are incorporated herein by reference in their entirety.

### Supplementary Note

Features relating to the embodiments described above are described below as supplements.
(1) A communication apparatus for performing underwater visible light communication with a target communication apparatus, the communication apparatus including:
   a visible light communicator that transmits and receives a visible light signal including communication data;
   a sound wave communicator that receives a sound wave signal including information used to control establishment of visible light communication connection, the sound wave signal having been transmitted from the target communication apparatus or another communication apparatus; and
   a controller that performs control to establish the visible light communication connection with the target communication apparatus, based on the information included in the received sound wave signal.
(2) The communication apparatus according to (1) above, wherein
   the sound wave communicator receives the sound wave signal including an identifier of the target communication apparatus as the information.
(3) The communication apparatus according to (1) or (2) above, wherein
   a visible light communication direction is variable, the visible light communication direction being a direction in which the visible light communicator transmits the visible light signal, and the controller
   acquires a position of the target communication apparatus through sound wave communication using the sound wave communicator, and
   controls the visible light communicator to direct the visible light communication direction at the target communication apparatus, based on the position of the target communication apparatus and a position of the communication apparatus.
(4) The communication apparatus according to any one of (1) to (3) above, wherein
   the sound wave communicator receives the sound wave signal including position information indicating the position of the target communication apparatus as the information, and
   the controller acquires the position of the target communication apparatus, based on the position information included in the sound wave signal.
(5) The communication apparatus according to any one of (1) to (4) above, wherein
   the sound wave communicator receives the sound wave signal including the position information from the target communication apparatus.
(6) The communication apparatus according to any one of (1) to (5) above, wherein
   the sound wave communicator receives the sound wave signal including the position information from a position management communication apparatus different from the target communication apparatus.
(7) The communication apparatus according to any one of (1) to (6) above, wherein
   the communication apparatus is a terminal apparatus that performs the underwater visible light communication with the target communication apparatus being a base station apparatus selected out of a plurality of base station apparatuses, and
   the controller further acquires a position of the terminal apparatus through the sound wave communication.
(8) The communication apparatus according to any one of (1) to (7) above, wherein
   the sound wave communicator
   transmits a first sound wave signal, and
   receives a second sound wave signal from each of the plurality of base station apparatuses having received the first sound wave signal, and
   the controller acquires the position of the terminal apparatus, based on a round-trip propagation time from each of the plurality of base station apparatuses determined according to reception of the second sound wave signal.
(9) The communication apparatus according to any one of (1) to (8) above, wherein
   the sound wave communicator
   transmits a first sound wave signal to a plurality of positioning communication apparatuses different from the base station apparatus, and
   receives a second sound wave signal from each of the plurality of positioning communication apparatuses having received the first sound wave signal, and
   the controller acquires the position of the terminal apparatus, based on a round-trip propagation time from each of the plurality of positioning communication apparatuses determined according to reception of the second sound wave signal.
(10) The communication apparatus according to any one of (1) to (9) above, wherein
   the sound wave communicator receives a positioning reference signal transmitted from each of the plurality of base station apparatuses synchronously between the plurality of base station apparatuses as the sound wave signal, and
   the controller acquires the position of the terminal apparatus, based on the received positioning reference signal.
(11) The communication apparatus according to any one of (1) to (10) above, wherein
   the controller
   acquires a distance between the communication apparatus and the communication apparatus, based on the position of the target communication apparatus and the position of the communication apparatus, and
   controls initial transmit power of the visible light signal in the underwater visible light communication, based on the acquired distance.
(12) The communication apparatus according to any one of (1) to (11) above, wherein
   a visible light communication direction is variable, the visible light communication direction being a direction in which the visible light communicator transmits the visible light signal,
   the sound wave communicator receives the sound wave signal transmitted from the target communication apparatus, and
   the controller
   estimates a direction of arrival of the sound wave signal, based on the sound wave signal received by the sound wave communicator, and
   controls the visible light communicator to make the visible light communication direction match the direction of arrival.
(13) The communication apparatus according to any one of (1) to (12) above, wherein
   the controller
   acquires a distance between the target communication apparatus and the communication apparatus, based on an attenuation amount calculated from transmit power of the sound wave signal in the target communication apparatus and receive power of the sound wave signal received by the sound wave communicator, and
   controls initial transmit power of the visible light signal in the underwater visible light communication, based on the acquired distance.
(14) The communication apparatus according to any one of (1) to (13) above, wherein
   the controller
   calculates an evaluation value indicating estimation accuracy of the direction of arrival, and
   controls a movable range in adjusting the visible light communication direction in the underwater visible light communication, based on the calculated evaluation value.
(15) The communication apparatus according to any one of (1) to (14) above, wherein
   the sound wave communicator transmits and/or receives a connection sound wave signal to establish the visible light communication connection to and/or from the target communication apparatus, and
   the controller controls, after the visible light communication connection is established, the visible light communicator to perform the underwater visible light communication with the target communication apparatus.
(16) The communication apparatus according to any one of (1) to (15) above, wherein
   the communication apparatus is a terminal apparatus that performs the underwater visible light communication with the target communication apparatus being a base station apparatus selected out of a plurality of base station apparatuses, and
   the controller performs the control of selecting the target communication apparatus out of the plurality of base station apparatuses, based on the information included in the sound wave signal.
(17) The communication apparatus according to any one of (1) to (16) above, wherein
   the controller
   acquires a distance between the communication apparatus and each of the plurality of base station apparatuses, based on the sound wave signal, and
   performs the control of selecting the target communication apparatus out of the plurality of base station apparatuses, based on the distance acquired with respect to each of the plurality of base station apparatuses.
(18) The communication apparatus according to any one of (1) to (17) above, wherein
   the sound wave communicator receives the sound wave signal including accommodation availability information indicating accommodation availability for the terminal apparatus in the base station apparatus as the information, and
   the controller performs the control of selecting the target communication apparatus out of the plurality of base station apparatuses, based on the accommodation availability information included in the sound wave signal.
(19) The communication apparatus according to any one of (1) to (18) above, wherein
   the sound wave communicator receives the sound wave signal including propagation environment information indicating a propagation environment that affects the underwater visible light communication with a base station apparatus as the information,
   the propagation environment information indicates turbidity and/or solar noise as the propagation environment, and
   the controller performs the control of selecting the target communication apparatus out of the plurality of base station apparatuses, based on the propagation environment information included in the sound wave signal.
(20) The communication apparatus according to any one of (1) to (19) above, wherein
   the sound wave communicator receives the sound wave signal including recommended base station information indicating at least one base station apparatus selected on a network side out of the plurality of base station apparatuses as the information, and
   the controller performs the control of selecting the target communication apparatus out of the plurality of base station apparatuses, based on the recommended base station information included in the sound wave signal.
(21) A communication method used in a communication apparatus that performs underwater visible light communication with a target communication apparatus, the communication method including:
   receiving a sound wave signal including information used to control establishment of visible light communication connection, the sound wave signal having been transmitted from the target communication apparatus or another communication apparatus;
   performing control to establish the visible light communication connection with the target communication apparatus, based on the information included in the received sound wave signal; and
   transmitting and receiving a visible light signal including communication data.

### REFERENCE SIGNS

100: Communication apparatus
100a: Terminal apparatus
100b: Base station apparatus
110: Visible light communicator
111: Light emitter
112: Light receiver
113: Driver
120: Sound wave communicator
121: Wave transmitter
122: Wave receiver
130: Controller
140: Backhaul communicator
150: GNSS positioning unit
200: Positioning communication apparatus
300: Position management communication apparatus
400: Network node
500: Optical sensor

## Claims

1. A communication apparatus configured to perform underwater visible light communication with a target communication apparatus, the communication apparatus comprising:
a visible light communicator configured to transmit and receive a visible light signal comprising communication data;
a sound wave communicator configured to receive a sound wave signal comprising information used to control establishment of visible light communication connection, the sound wave signal having been transmitted from the target communication apparatus or another communication apparatus; and
a controller configured to perform control to establish the visible light communication connection with the target communication apparatus, based on the information comprised in the received sound wave signal.

2. The communication apparatus according to claim 1, wherein
the sound wave communicator is configured to receive the sound wave signal comprising an identifier of the target communication apparatus as the information.

3. The communication apparatus according to claim 1 or 2, wherein
a visible light communication direction is variable, the visible light communication direction being a direction in which the visible light communicator transmits the visible light signal, and
the controller is configured to
acquire a position of the target communication apparatus through sound wave communication using the sound wave communicator, and
control the visible light communicator to direct the visible light communication direction at the target communication apparatus, based on the position of the target communication apparatus and a position of the communication apparatus.

4. The communication apparatus according to claim 3, wherein
the sound wave communicator is configured to receive the sound wave signal comprising position information indicating the position of the target communication apparatus as the information, and
the controller is configured to acquire the position of the target communication apparatus, based on the position information comprised in the sound wave signal.

5. The communication apparatus according to claim 4, wherein
the sound wave communicator is configured to receive the sound wave signal comprising the position information from the target communication apparatus.

6. The communication apparatus according to claim 4, wherein
the sound wave communicator is configured to receive the sound wave signal comprising the position information from a position management communication apparatus different from the target communication apparatus.

7. The communication apparatus according to claim 3, wherein
the communication apparatus is a terminal apparatus configured to perform the underwater visible light communication with the target communication apparatus being a base station apparatus selected out of a plurality of base station apparatuses, and
the controller is configured to further acquire a position of the terminal apparatus through the sound wave communication.

8. The communication apparatus according to claim 7, wherein
the sound wave communicator is configured to
transmit a first sound wave signal, and
receive a second sound wave signal from each of the plurality of base station apparatuses having received the first sound wave signal, and
the controller is configured to acquire the position of the terminal apparatus, based on a round-trip propagation time from each of the plurality of base station apparatuses determined according to reception of the second sound wave signal.

9. The communication apparatus according to claim 7, wherein
the sound wave communicator is configured to
transmit a first sound wave signal to a plurality of positioning communication apparatuses different from the base station apparatus, and
receive a second sound wave signal from each of the plurality of positioning communication apparatuses having received the first sound wave signal, and
the controller is configured to acquire the position of the terminal apparatus, based on a round-trip propagation time from each of the plurality of positioning communication apparatuses determined according to reception of the second sound wave signal.

10. The communication apparatus according to claim 7, wherein
the sound wave communicator is configured to receive a positioning reference signal transmitted from each of the plurality of base station apparatuses synchronously between the plurality of base station apparatuses as the sound wave signal, and
the controller is configured to acquire the position of the terminal apparatus, based on the received positioning reference signal.

11. The communication apparatus according to claim 3, wherein
the controller is configured to
acquire a distance between the communication apparatus and the communication apparatus, based on the position of the target communication apparatus and the position of the communication apparatus, and
control initial transmit power of the visible light signal in the underwater visible light communication, based on the acquired distance.

12. The communication apparatus according to claim 1 or 2, wherein
a visible light communication direction is variable, the visible light communication direction being a direction in which the visible light communicator transmits the visible light signal,
the sound wave communicator is configured to receive the sound wave signal transmitted from the target communication apparatus, and
the controller is configured to
estimate a direction of arrival of the sound wave signal, based on the sound wave signal received by the sound wave communicator, and
control the visible light communicator to make the visible light communication direction match the direction of arrival.

13. The communication apparatus according to claim 12, wherein
the controller is configured to
acquire a distance between the target communication apparatus and the communication apparatus, based on an attenuation amount calculated from transmit power of the sound wave signal in the target communication apparatus and receive power of the sound wave signal received by the sound wave communicator, and
control initial transmit power of the visible light signal in the underwater visible light communication, based on the acquired distance.

14. The communication apparatus according to claim 12, wherein
the controller is configured to
calculate an evaluation value indicating estimation accuracy of the direction of arrival, and
control a movable range in adjusting the visible light communication direction in the underwater visible light communication, based on the calculated evaluation value.

15. The communication apparatus according to claim 1 or 2, wherein
the sound wave communicator is configured to transmit and/or receive a connection sound wave signal to establish the visible light communication connection to and/or from the target communication apparatus, and
the controller is configured to, after the visible light communication connection is established, control the visible light communicator to perform the underwater visible light communication with the target communication apparatus.

16. The communication apparatus according to claim 1 or 2, wherein
the communication apparatus is a terminal apparatus configured to perform the underwater visible light communication with the target communication apparatus being a base station apparatus selected out of a plurality of base station apparatuses, and
the controller is configured to perform the control of selecting the target communication apparatus out of the plurality of base station apparatuses, based on the information comprised in the sound wave signal.

17. The communication apparatus according to claim 16, wherein
the controller is configured to
acquire a distance between the communication apparatus and each of the plurality of base station apparatuses, based on the sound wave signal, and
perform the control of selecting the target communication apparatus out of the plurality of base station apparatuses, based on the distance acquired with respect to each of the plurality of base station apparatuses.

18. The communication apparatus according to claim 16, wherein
the sound wave communicator is configured to receive the sound wave signal comprising accommodation availability information indicating accommodation availability for the terminal apparatus in the base station apparatus as the information, and
the controller is configured to perform the control of selecting the target communication apparatus out of the plurality of base station apparatuses, based on the accommodation availability information comprised in the sound wave signal.

19. The communication apparatus according to claim 16, wherein
the sound wave communicator is configured to receive the sound wave signal comprising propagation environment information indicating a propagation environment that affects the underwater visible light communication with a base station apparatus as the information,
the propagation environment information indicates turbidity and/or solar noise as the propagation environment, and
the controller is configured to perform the control of selecting the target communication apparatus out of the plurality of base station apparatuses, based on the propagation environment information comprised in the sound wave signal.

20. The communication apparatus according to claim 16, wherein
the sound wave communicator is configured to receive the sound wave signal comprising recommended base station information indicating at least one base station apparatus selected on a network side out of the plurality of base station apparatuses as the information, and
the controller is configured to perform the control of selecting the target communication apparatus out of the plurality of base station apparatuses, based on the recommended base station information comprised in the sound wave signal.

21. A communication method used in a communication apparatus configured to perform underwater visible light communication with a target communication apparatus, the communication method comprising the steps of:
receiving a sound wave signal comprising information used to control establishment of visible light communication connection, the sound wave signal having been transmitted from the target communication apparatus or another communication apparatus;
performing control to establish the visible light communication connection with the target communication apparatus, based on the information comprised in the received sound wave signal; and
transmitting and receiving a visible light signal comprising communication data.
